# EUROPEAN PATENT SPECIFICATION

(11) **EP 1 596 588 B1**
(45) Date of publication and mention of the grant of the patent: **08.10.2014**
(21) Application number: 05010209.4
(22) Date of filing: 11.05.2005
(51) Int. Cl.: H04N 21/45, H04N 21/466, H04N 21/472, H04N 21/475, H04N 21/482, H04N 5/445

(54) **Method and apparatus for processing article management information and computer program therefor**
Verfahren und Vorrichtung zum Verarbeiten von Information zur Verwaltung von Artikeln und Computerprogramm dafür
Procédé et dispositif de traitement d'information pour la gestion d'articles et programme d'ordinateur associé

(30) Priority: 13.05.2004 JP 2004143169
(43) Date of publication of application: 16.11.2005
(73) Proprietor: Sony Corporation, Tokyo 141 (JP)
(72) Inventor: Kaneko, Jun, Shinagawa-ku Tokyo (JP); Yamamoto, Tomoyuki, Shinagawa-ku Tokyo (JP); Sumiyoshi, Kazuhito, Shinagawa-ku Tokyo (JP); Minami, Setsushi, Shinagawa-ku Tokyo (JP); Aoki, Shunsuke, Shinagawa-ku Tokyo (JP)
(74) Representative: Melzer, Wolfgang

(56) References cited:
- WO-A-03/044624
- WO-A1-02/093915
- WO-A1-2004/002139
- US-A1- 2002 120 925
- US-A1- 2002 133 506
- US-A1- 2003 093 790
- US-B1- 6 311 329

## Description

### BACKGROUND OF THE INVENTION

The present invention relates to an information processing apparatus, an information processing method, a computer program, and a recording medium for presenting information concerning a program to be broadcasted from a broadcast station. More specifically this invention relates to an information processing apparatus, an information processing method, and a computer program capable of executing information display processing enabling easy recognition of programs that a user is much interested by acquiring information concerning programs to be broadcasted from a broadcast station, and collecting acquired article information by program.

Rapid progress in digital technology has made it possible to store large quantities of audio and video (AV) data without deterioration over time. In these days, a recording medium such as an HDD or a DVD having many dozens of GB storage capacity has become relatively inexpensive, and a recording apparatus with an HDD base or a DVD base is also available in the market. In connection with realization of a large capacity of those recording media, it is possible to record and accumulate the number of programs in a recording apparatus.

In association with realization of a large capacity of recording media for recording and accumulating the number of programs, the problem has occurred that a workload to a user is increased for choosing a program to be recorded and reserving recording of the program. In order to reduce such a workload to the user, a system for storing and accumulating information concerning use's preference or profile, and automatically recording and reserving a program based on those information has been developed.

An automatic reservation processing is executed, for instance, based on an EPG (Electric Program Guide) sent from a broadcast station or the like. The EPG (Electric Program Guide) includes attribute information corresponding to broadcast contents such as a broadcasting date and time, a broadcast channel, casting information and a program outline on each broadcast contents.

The recording apparatus receives an EPG (Electronic Program Guide), verifies the EPG to user's preference or profile information stored in a storage area and automatically chooses contents to be reserved. The automatic recording reservation processing based on the EPG and the preference information is disclosed in the Patent Document 1.

A user's device having received the EPG (Electronic Program Guide) can display contents information included in the EPG such as, for instance, casting information and a program outline on a display, and thereby the user can obtain outline of contents for a scheduled program.

International Application Publication WO 03/044624 A2 discloses using meta data to determine programming events of interest for recording or generating alerting banners. The meta data may be generated by receiving descriptive information and timing information for the programming event and analyzing the received information to determine a category goodness of fit scores for the programming event corresponding to categories of a classification category and further determine keywords associated for the programming event. The category goodness and the determined keywords may be stored as meta data for the programming event.

Patent application publication US 2003/0093790 A1 discloses a system for utilizing meta data either at a central location for shared use by connected users or at each user's location. Different mechanisms are employed for automatically and manually identifying and designating programming segments, associating this descriptive meta data with the identified segments, distributing the meta data for use at a client's location and using the supplied meta data to selectively play back and record meta data.

Further, US 2004/0133506 A1 shows a server delivering a degree of interest in broadcast programs and a corresponding method. In order to judge the level of interest in the broadcast program, the server scans a network, e.g. the internet for user generated messages regarding the individual program. The number of messages is supposed to equal the level of interest in the certain program. Based on this level of interest, a recording of the individual program is initiated. International application publication WO 2004/002139 A1 and its English language patent family member US 2005/0166228 A1 show program-related information which is acquired via an URL, and acquire the program-related information based on the URL for superimposing the program-related information to the program during reproduction.

International application publication WO 02/093915 A1 records link data such as an URL relating to a program-related information in addition to the program and provides the user with an embedded link information supplementing the locally stored recorded program. An update controller is capable of using the link information to access supplemental data files on remote data servers.

Patent document US 6,311,329 B1 provides an information providing apparatus and a method by which the amount of data to be transmitted when data of a program table of characters and images are to be transmitted is reduced. The information providing apparatus is further capable to handle a change in contents of the data rapidly. Data of an EPG to be provided is to be hierarchized into data which might be subject to change, for example, broadcasting data, start and end time, data which are not to be changed at all, for example program name and program title, and data such as still picture, moving pictures, a voice having a large data amount and for each medium, data of a suitable hierarchy to that medium is provided.

However, only the selection of the object to be recorded based on the preference information stored in the storage area doesn't necessarily execute the recording in accordance with the user's intention. Accordingly, the user's need to select a program by displaying program information for programs to be broadcasted on the display requires efficiency for the program selection processing by the user.

### [Patent Document 1]

Japanese Patent Laid-open No. 2002-24862

### SUMMARY OF THE INVENTION

The present invention was made in view of the forging, and it is desirable to provide an information processing apparatus and an information processing method, and a computer program enabling efficient selection of a program. The program is recognizable that a user is much interested when program information for programs to be broadcasted is displayed on a display device and the user performs program selection.

More specifically, it is desirable to provide an information processing apparatus, an information processing method, and a computer program enabling realization of efficient program selection by a user by acquiring article information relating to programs to be broadcasted from each broadcast station, collecting the acquired article information by each related program and generating and presenting display data enabling easy recognition of programs interesting users much.

According to the present invention, there is provided an information processing apparatus including: a data input section for inputting article management information including article information relating to a broadcast program and having an article identifier and a program identifier for a program relating to the article; a storage section for storing therein said article management information; a data collecting section for acquiring article management information stored in said storage section and generating collecting data with program-related articles classified by program device based on program identifiers, a display control section for controlling to generate display data enabling recognition of programs having many related articles based on the collecting data generated by said data collecting section and display the display data on a display section; and a display section for displaying display data generated by the display control section.

According to the present invention, there is provided an information processing method including the steps of: acquiring article management information including article information relating to a broadcast program and having an article identifier and a program identifier for a program relating to the article and generating collecting data including program-related articles classified by program device based on program identifiers for data collection; controlling to generate display data enabling recognition of programs having many related articles based on the collecting data generated in said data collecting step and display the display data on a display section; and displaying the display data generated in the display control step.

According to the present invention, there is provided a computer program for generating display information, said program comprising the steps of: acquiring article management information including article information relating to a broadcast program and having an article identifier and a program identifier for a program relating to the article and generating collecting data with program-related articles classified by program device based on the program identifier for data collection; controlling to generate display data enabling recognition of a program having many related articles based on the collecting data generated in said data collecting step and display the display data on a display section; and displaying the display data generated in the display control step.

According to the present invention, there is provided a recording medium for recording computer program for generating display information, said computer program comprising the steps of: acquiring article management information including article information relating to a broadcast program and having an article identifier and a program identifier for a program relating to the article and generating collecting data with program-related articles classified by program device based on the program identifier for data collection; controlling to generate display data enabling recognition of a program having many related articles based on the collecting data generated in said data collecting step and display the display data on a display section; and displaying the display data generated in the display control step.

The computer program according to the present invention can be provided to a computer system capable of executing various types of program code with a storage medium, a communication medium, a recording medium such as a CD, FD, and an MO providing various program codes in the computer readable form, or through a communication network. When the program is provided in the computer-readable form, the computer system can realize a process corresponding to the supplied program.

Other objects, features or advantages of the present invention will be disclosed by the detailed descriptions based on the examples or the accompanied drawings as described later. The term of "system" as used herein indicates a collection of logical groups for a plurality of devices, and the components devices are not always required to be provided within one housing.

With the configuration according to the present invention, in an information processing apparatus for acquiring article management information including article information relating to broadcast programs and having an article identifier and a program identifier for a program relating to the article, collecting data with program-related article classified by program device based on each program identifier is generated, a list of programs displaying programs having many related articles respectively in the ascending order is generated and displayed based on the generated collecting data, or icons are displayed only for programs having many related articles. Thus, programs in which a user is highly interested are determined based on the number of articles acquired by the user and display data enabling recognition of the programs is generated and displayed, so that programs in which the user is highly interested can efficiently be selected from among a vast number of programs.

### BRIEF DESCRIPTION OF THE DRAWINGS

Fig. 1 is a view illustrating configuration of a recording apparatus according to an embodiment of the present invention;
Fig. 2 is a view illustrating configuration for management of various types of information associated with the production of a program that may be recorded by the recording apparatus according to an embodiment of the present invention;
Fig. 3 is a view illustrating program management information for management of the program management system;
Fig. 4 is a view illustrating article management information managing an article management system and a sending process of an article identifier to a program management system;
Fig. 5 is a view illustrating a processing sequence up to recording with the recording apparatus according to an embodiment of the present invention;
Fig. 6 is a view illustrating a process of acquiring an article from an article management system according to the recording apparatus of an embodiment of the present invention;
Fig. 7 is a view illustrating a process of registering a recording reservation list with the recording apparatus according to an embodiment of the present invention;
Fig. 8 is a view illustrating a process of storing information concerning the broadcasting date and time in the recording reservation list created by a recording apparatus according to an embodiment of the present invention;
Fig. 9 is a view illustrating the data collection processing executed by the recording apparatus according to an embodiment of the present invention;
Fig. 10 is a view illustrating the data collection processing and data display processing executed by the recording apparatus according to an embodiment of the present invention;
Fig. 11 is a view showing an example of a display screen displayed as a result of the data display processing executed by the recording apparatus according to an embodiment of the present invention;
Fig. 12 is a view showing an example of a display screen displayed as a result of the data display processing executed by the recording apparatus according to an embodiment of the present invention;
Fig. 13 is a block diagram illustrating functions of the recording apparatus according to an embodiment of the present invention;
Fig. 14 is a sequence diagram illustrating a sequence of processes up to recording process with the recording apparatus according to an embodiment of the present invention;
Fig. 15 is a flow chart illustrating the data collection processing and data display processing executed by the recording apparatus according to an embodiment of the present invention;
Fig. 16 is a view illustrating one example of a process sequence according to an embodiment of the present invention;
Fig. 17 is a view illustrating one example of a process sequence according to an embodiment of the present invention; and
Fig. 18 is a view illustrating one embodiment in which an article managed by an article management system is acquired based on a license.

### DETAILED DESCRIPTION OF PREFERRED EMBODIMENTS

The information processing apparatus, information processing method, and computer program according to the present invention are described in detail below with reference to the related drawings in the following order:
1. Hardware configuration of the recording apparatus
2. Details of a recording reservation and a recording process
3. Processes for collecting acquired articles and presenting a program guide to users
4. Other examples

### [1. Hardware configuration of the recording apparatus]

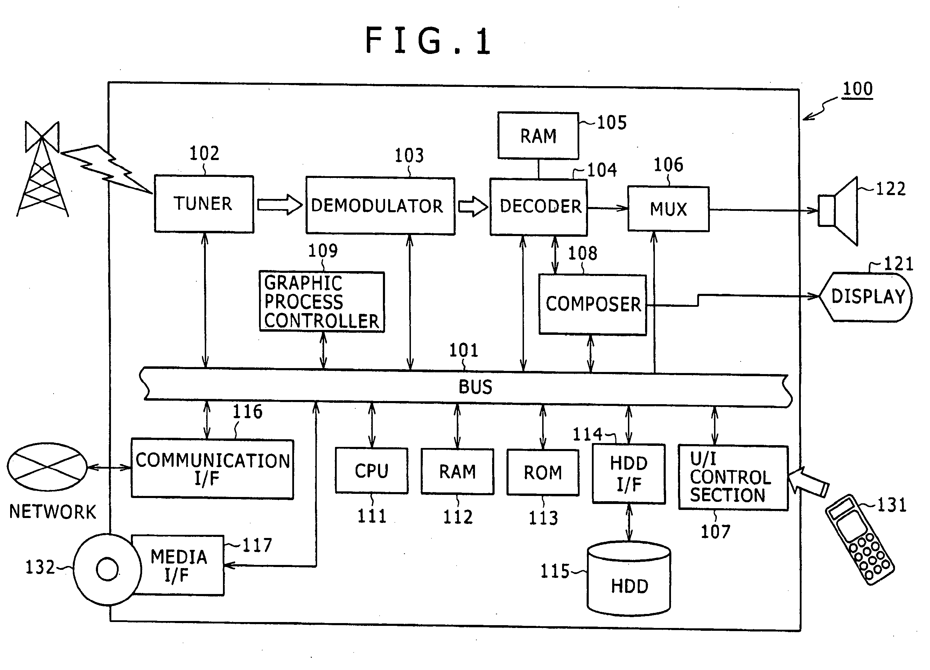

Hardware configuration of recording apparatus 100 as an information processing apparatus according to the present invention is explained below with reference to Fig. 1.

The recording apparatus 100 according to the present invention records a broadcast program (broadcast contents) broadcasted momentarily from each broadcast station. The recording apparatus 100 according to the present invention enables a reservation for recording and provides services enabling retrieval and presentation of recorded contents as well as contents to be recorded. The recording apparatus 100 can be incorporated as an AV device, and, for instance, can be integrated with a TV receiving set such as a set top box (STB).

In the recording apparatus 100, a CPU (Central Processing Unit) 111 as a main controller is interconnected to each hardware component via a bus 101, and provides overall controls to each component. Each component of the recording apparatus 100 is described hereinafter.

Broadcast wave received by an antenna (not shown) is provided to a tuner 102. The broadcast wave has a prescribed format and may include, for instance, an EPG (electric program guide). Any wave, such as surface wave, satellite wave, wired or wireless is acceptable as an broadcast wave.

The tuner 102 tunes a broadcast wave of designated channel, namely selects a channel according to an instruction from the CPU 111, and sends the received data to a subsequent demodulator 103. The demodulator 103 demodulates the modulated received data. Configuration of the tuner 102 may be changed or expanded, if necessary, according to whether the transmitted broadcast wave is analog or digital.

In case of digital satellite broadcast, digital data received and demodulated from broadcast wave is "transport stream" in which AV data compressed by adopting MPEG2 (Moving Picture Experts Group 2) method and data for broadcast data are multiplexed. The former AV data is image and sound information including broadcast contents. The latter data for broadcast data is data associated with the broadcast program, and includes, for instance, an EPG (Electric Program Guide). The transport stream is regulated by a "transport layer" as defined in relation to the OSI (Open Systems Interconnection) reference model.

A decoder 104 decodes the transport stream and separates the transport stream into MPEG2-compressed AV data and data for data broadcasting. Further, the decoder 104 separates MPEG2-compressed real time AV data into compressed video data and compressed audio data. Then, the video data is subjected to MPEG2 extension processing to regenerate the original video signals, and the audio data is subjected to PCM (Pulse Code Modulation) decoding and is synthesized with additional sounds to produce a reproduced audio signal. The decoder 104 may be provided with a memory 105 for storing work data in a local memory thereof. The reproduced video signal is displayed on a display 121 via a composer 108, and the reproduced audio signal is outputted from a speaker 122 via a mixer 106.

The decoder 104 transfers the data for data broadcasting separated from the transport stream to the CPU 111 via the bus 101. The CPU 111 is processed by a prespecified application and can be used, for instance, for creating an EPG screen.

Further the decoder 104 can transfer the MPEG2 stream before subjected extension processing to other equipments (such as the HDD 115) via the bus 101 on in response to a demand of the CPU 111 to the CPU 111.

A user interface control section 107 is a module of processing an input from a user, and is provided with operation buttons/switches (not shown) or a device allowing for a remote operation with a remote controller 131 via infrared ray (IR). The user interface control section 107 may further include a display panel or a LED indicator to display currently set-up contents.

The CPU 111 is a main controller for controlling all operations of the recording apparatus 100, and for instance the CPU 111 can execute various types of applications on a platform provided by an operating system (OS).

A RAM (Random Access Memory) 112 is a writable volatile memory for loading an execution program code of the CPU 111 or for writing work data of the execution program. A ROM (Read Only Memory) 113 is a read-only memory for storing permanently therein a self-diagnostic program, an initializing program executed when power to the recording apparatus 100 is turned ON, and a control code for hardware operations.

A communication interface 116 is connected to various types of networks such as a LAN or the Internet, and has a structure which allows for communications with enables various types of devices connected through a LAN and a server connected to outside networks.

A hard disc device (HDD) 115 is a random-accessible external memory device enabling accumulation of programs and data as files file with a prespecified format, and has a large capacity such as, for instance, many dozens of GB (or more than 100 GB). A memory space on the hard disc is controlled, for instance, by a operating system. The HDD 115 is connected to the bus 101 via a hard disc interface 114. In this embodiment, the hard disc device 115 can be used as a domain for recording broadcast program contents therein and also can be used as a domain for storing therein the EPG (electronic program guide) information. Moreover, the hard disc device 115 is utilized as a domain for storing various types of information such as program information or article information as described hereinafter. An external memory device with a large capacity available for carrying out the present invention is not limited to a hard disc, and a recording medium 132 such as a DVD capable of access via such as a media interface 117 may also be used. It is preferable that the recording medium is random-accessible.

The CPU 111 can execute various types of applications under control by an operating system. For instance, the CPU 111 issues a command for recording and for reproducing the contents in response to a user command via the remote control 131 or the U/I controlling device 107 (or may always perform recording regardless of whether a user command is inputted or not).

The MPEG2 stream before subjected to the extension processing is transferred from the decoder 104 to the HDD 115 according to a command from the CPU 111. Any method such as PIO (program IO) method or DMA (Direct Memory Access) method may be used for data transfer. Broadcast contents is stored in the HDD 115 for each virtual channel in time sequence.

When reproducing recorded contents, the MPEG2 stream received from the HDD 115 is transferred to the decoder 104 via the bus 101 according to a command from the CPU 111. The decoder 104 separates the received data into compressed video data and compressed audio data simultaneously when the data is received, and converts these data to the original state by MPEG2 extension processing for reproduction.

In addition to recording broadcast contents and reproduction of the contents, the CPU 111 executes the following processes:
(1) Analysis of the EPG in which, for instance, an EPG (electric program guide) written in the data for data broadcasting received together broadcast contents is acquired and analyzed.
(2) Generation of a recording reservation list based on article information which acquired from an article management system described hereinafter.
(3) Scheduling for recording and reproduction of recorded contents based on a recording reservation list generated based on article information, a result of EPG analysis, and time information. The generated schedule is stored in the hard disc device 115 as a broadcast time table in the recording apparatus 100.

A graphic processing controller 109 is a dedicated controller for generating a computer screen according to a drawing command issued from the CPU 111, and has the drawing capability such as that of the SVGA (Super Video Graphic Array) or XGA (extended Graphic Array). The graphic processing controller 109 draws graphics of GUI (Graphical User Interface) or EPG screen for instance.

When reproduced image restored by means of MPEG2 extension processing by the decoder 104 and a computer image generated by the graphic processing controller 109 are superimposed, the composer 108 executes the processing for synthesizing.

### [2. Details of recording reservation and a recording process]

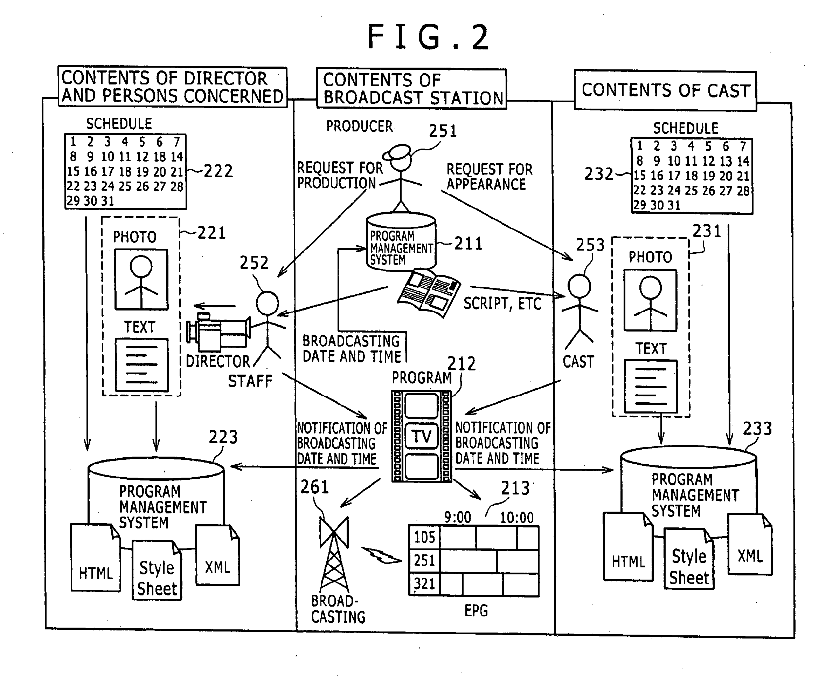

Next, system configuration for a process executed by the recording apparatus according to the present invention, namely for executing a reservation for recording contents with a broadcasting date and time thereof not having been fixed is described below with reference to Fig. 2 and on.

Fig. 2 is an explanatory view illustrating an outline of a process for making broadcast contents, that is, an outline of a process for making a program and configuration for generating, storing and managing data in the process of making contents.

With the recording apparatus according to the present invention, article information concerning contents provided by persons concerned is accumulated, and the accumulated article information is acquired by the user's recording apparatus, a program corresponding to the acquired article information is identified, and a reservation is made for recording the program based on the article information.

As shown in Fig. 2, many people are involved in preparation of a broadcast program. Specifically, they are a director 252 for a broadcast program, persons concerned to the program (staff), and casts, and all of them work under direction by a producer 251 belonging to a broadcast station.

Fig. 2 shows the director 252 as a representative of directors and persons concerned (staff) involved in preparation of a broadcast program and one cast 253, but there may be many directors, other concerned staff and casts depending on contents of a the broadcast program to be prepared, and the following processes are carried out by the directors, other staff, and casts in cooperation.

A broadcast station manages a broadcast program to be broadcasted from the broadcast station by applying a program management system 211. The program management system 211 has a database, and registers each program identifiably with a program identifier (program ID), and manages information concerning a script, a director, casts and the like. The information is provided to persons concerned to the program including as the director 252 and the casts 253.

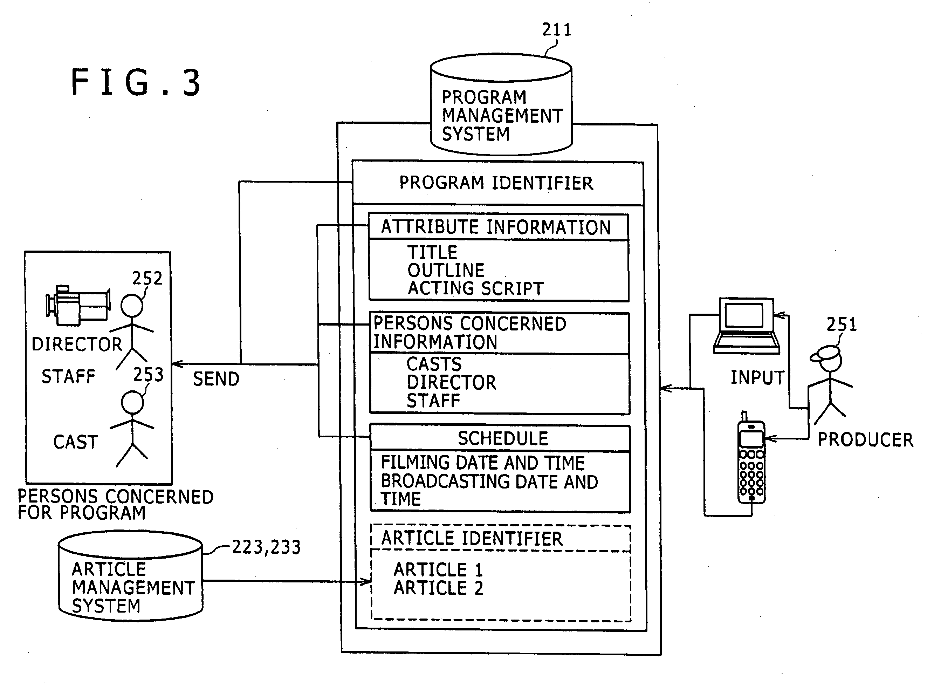

Fig. 3 is a view showing an example of the information managed by the program management system 211. In the database of the program management system 211, a program identifier (program ID) assigned to each program and various types of program managing information for the program identifier (program ID), namely the following information is stored
a) Attribution information: various types of attribution information such as a title, an outline of a program, and a script for the program.
b) Persons concerned information: persons concerned to the program such as casts, a director and staff.
c) Schedule: Date and time for filming and broadcasting, including expected and not fixed.
d) An article identifier: Article identification information generated by persons concerned to the program and registered in the article management system, such as an article 221 prepared by the director 252 and the article 231 made by the cast 253 and registered in the article management system. This article identifier is registered on receiving the information from the article management system.

A program identifier (program ID) is a unique ID assigned to an individual program, and for instance URL including such as identification information of a broadcast station can be used. For instance, URL [http://www.tv.com/program/000001] is assigned to each program as a program identifier (program ID).

As the information corresponding to the program identifier, a) attribute information, b) persons concerned information, c) schedule information are input and registered sequentially. When a photographing date and time and an broadcasting date and time has not been determined, "not determined" is recorded, and when unfixed, the scheduled information may be recorded.

Program information such as these a) attribute information, b) persons concerned information, c) program management information such as schedule information are input and managed at broadcasting station, and offered to persons concerned to a program namely the director 252 or the cast 253 sequentially. As means for offering information, such as data distribution via a network or a recording medium storing the information therein to send by post are applicable.
d) the article identifier is identification information of an article such as an article 221 generated by the director 252 or an article 231 generated by the cast 253. Such articles are generated by persons concerned to a program, and registered in the article management system. The article identifier is registered when the information is notified from the article management system.

The production process for a program and program management data are described in details below. When persons concerned to the program such as the director 252 and the cast 253 receive program management information with a program identifier set therein, generate an article corresponding to the program at an optional timing and register the article in the article management system. For registration, an article identifier is sent to the article management system together with the article.

Fig. 2 shows two article management systems; an article management system 223 having a database storing therein an article 221 generated by the director 252 and an article management system 233 having a database storing therein an article 231 generated by the cast 253. These systems corresponds to a server installed, for instance, at a production office to which the director 252 belongs or at a production office to which the cast 253 belongs.

The article 221 generated by the director 252 or the article 231 generated by the cast 253 includes articles how the production process of a program is going on and photographs and texts describing location information in a case where location for the program is made, and the director 252 or the cast 253 prepares an article from time to time and stores the articles in each article management system 223, 233. The process for storing the data is carried out, for instance, by sending input information with a personal digital assistance to the article management system 223, 233 via a network, or by mailing a recording medium with the data inputted therein to a system administrator, and then the system administrator inputs the data to the article management system 223, 233.

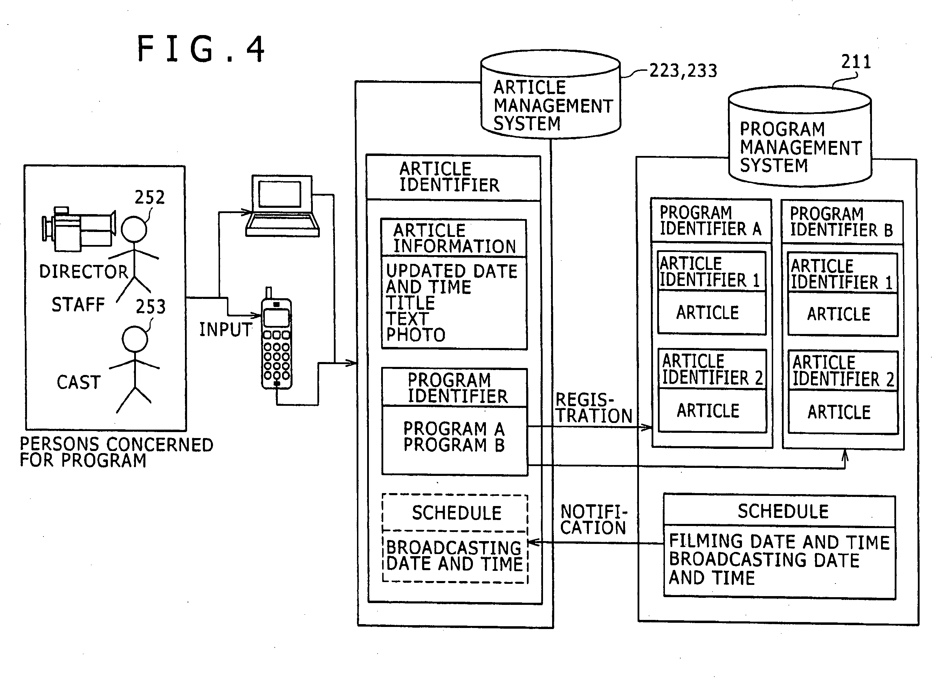

An example of information managed in the article management system 223, 233 is described below with reference to Fig. 4. Databases in the article management system 223, 233 store therein article identifiers set for various articles respectively (article ID) and various types of information for the article identifiers (article ID) respectively including the following types of information:
a) Article information: Various types of article information such as a updating date, a title, a description and a photograph
b) Program identifier: Information on a program identifier corresponding to an article
c) Schedule: After a broadcasting date and time are fixed and registered in a program management system, the schedule is notified from the program management system and registered. Before the broadcasting date and time are fixed, the data for the broadcasting date and time is not stored.

An article identifier (article ID) is a unique ID assigned to each discrete article, and, for instance, a URL may be used for accessing the article management systems 223, 233. For instance, URL [http://www.profile.com/kiji/000001] may be used as an article identifier (article ID).

As the information corresponding to this article identifier, a) article information, b) program identifier are stored and registered. The article information includes descriptions concerning how the production activities are going on, and descriptions of photographs or texts describing and showing location information. The program identifier is the program identifier described above with reference to Fig. 3, and is registered in a program managements system in a broadcast station.

The article management information corresponding to the article identifier illustrated in Fig. 4 shows two program identifiers A and B each as the program identifier b) above. This indicates that the article corresponds to two programs. As illustrated in Fig. 4, an article identifier corresponding to an article newly registered in the article management systems 223, 233 is informed to the program management system 211 from time to time and each article identifier is registered as program management information having an identifier matching and identical to that registered in the program management system 211.

The data format of information registered in the article management system 223, 233 is, for instance, XML, HTML or Style Sheet.

After a broadcasting date and time for a program corresponding to an article are determined and the broadcasting date and time are registered in the program management system 211 as schedule information, the schedule c) is informed from the program management system and recorded.

The article management system 223, 233 informs an article identifier corresponding to an article stored in the article management system to the program management system 211, and the program management system 211 stores the article identifier informed from the article management system 223, 233 in the program management information.

When the broadcasting date and time information from, for example, a producer or other persons concerned in a broadcast station, is input in the program management information, the program management system 211 notifies the broadcasting date and time to the article management system in which the article corresponding to the article identifier registered to the program management system 211 is stored.

General configuration of the program management system 211 is described below. The program management system 211 is a system for storing and managing article information concerning a program to be broadcasted, and has a database with article information and the program identifier recorded as article management information therein in correlation to an article identifier as an identifier of article information relating to a program to be broadcasted.

The program management system 211 further includes a program management system for storing thereon program management information in correlation to a program identifier, a data communication unit for executing communications with the recording apparatus, and a data processing section for receiving the broadcasting date and time information of program corresponding to the article management information stored in the database from the program management system, recording the broadcasting date and time information into the corresponding article management information, and providing the article management information in response to an access request from a recording apparatus to the recording apparatus.

As the article identifier, for instance, a URL may be used, and the data processing section of the program management system 211 provides the article corresponding to the URL to the recording apparatus in response to an access request from the recording apparatus by specifying the URL.

The sequence of program production is further described again with reference to Fig. 2. Under direction and management by a producer 251, a director 252, a cast 253 and other staff work together to complete a program 212, and after a broadcasting date and time for the program are fixed, the broadcasting date and time are recorded in the program management system 211 and informed to each of the article management systems 223, 233 from the program management system 211, and then are recorded as the information registered in the article management system 223, 233 as described above with reference to Fig. 4.

As described with reference to Figs. 3 and 4, the program information managed by referring to a program identifier under the program management system 211 includes an article identifier of a relating article registered therein, and the article management information managed by referring to the article identifier in the article management system 223, 233 includes the program identifier of the relating program registered therein. Namely, because the article information and the program information are set as linked data (associated data), it is possible to specify and acquire a relevant article by referring to the program identifier and also to specify a relevant program according to the article identifier.

The data transmitted between the program management system 211 and the article management system 223, 233 includes either a program identifier or an article identifier set therein, and the program management system 211 or the article management system 223, 233 specifies a destination from which necessary data is obtained or a place for storing data by referring to the identifiers.

As illustrated in Fig. 2, when a broadcasting date and time are fixed, an EPG (electronic program guide) including the broadcasting date and time information is generated, and the generated EPG 213 is provided to a user's recording apparatus. The EPG 213 may be provided with broadcast waves from a broadcast station 261, through a network, or with an information recording medium.

The user's recording apparatus generates a recording reservation list with an article identifier acquired from article management information acquired from the article management system stored therein, and then acquires the broadcasting date and time information from the article management system and adds the information to the recording reservation list after the broadcasting date and time are fixed.

The user's recording apparatus decides the recording schedule base on the broadcasting date and time information set in the recording reservation list.

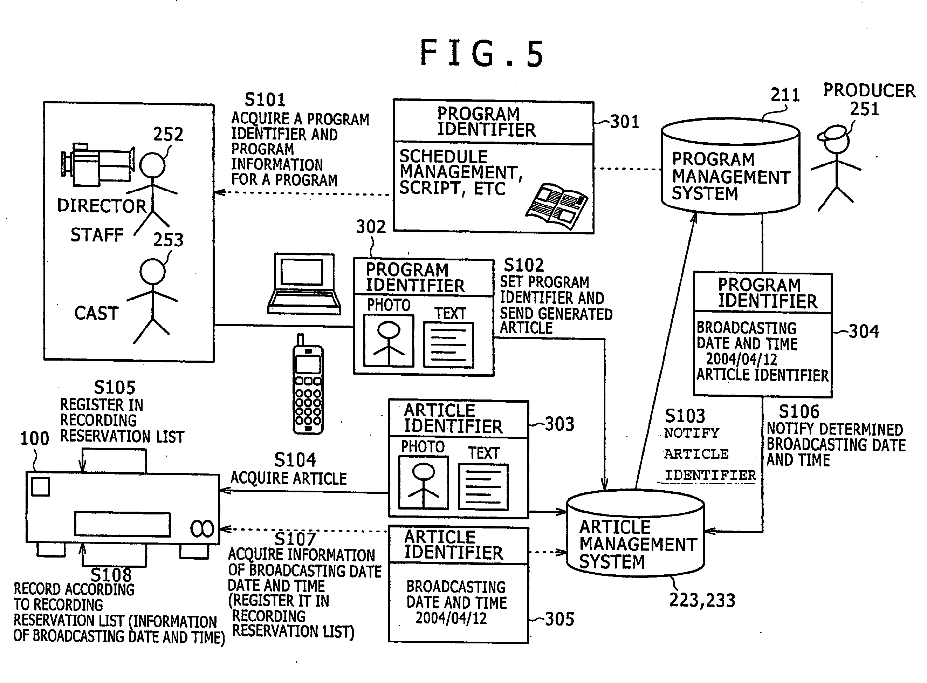

Operations of the user's recording apparatus are described below with reference to Fig. 5 and others. Fig. 5 is a view showing a sequence from the beginning of production of a program to completion of a recording reservation for the program. As illustrated in Fig. 5, the sequence includes steps S101 to S107.

In step S101, the program management information 301 including a program identifier is informed to persons concerned such as the director 252, the cast 253 and other staff based on the program management information managed in the program management system 211 controlled by the producer 251 at a broadcast station and the like.

In step S102, the director 252, cast 253 and other staff generate an article such as a topic concerning the program, and stores article information 302 including combined data consisting of the generated article and the program identifier in the article management system 223, 233. The article management system 223, 233 assigns an article identifier (such as a URL) to each stored article and stores the article identifier in a database thereof.

Fig. 5 shows one article management system, but as described above, different servers may be allocated persons concerned for the program such as each production office to which the cast belongs as the article management system 223, 233.

In step S103, the article management system 223, 233 informs the article identifier to the program management system 211. This operation is executed each time a new article is registered in the article management system 223, 233, or is executed at the fixed intervals. The program management system 211 registers the article identifier informed from the article management system 223, 233 in corresponding program management information. This operation was described above with reference to Fig. 3.

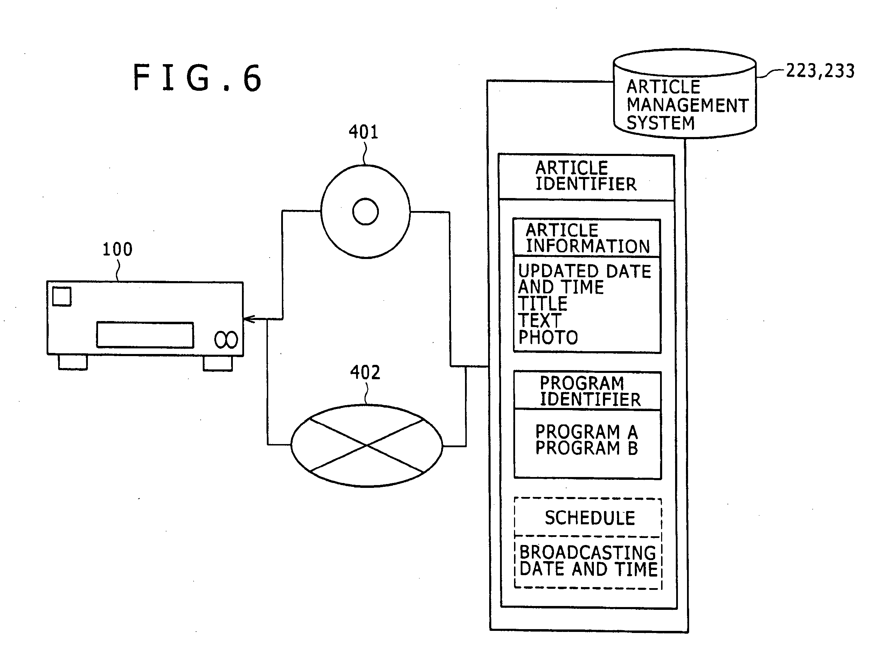

On the other hand, in step S104, the recording apparatus 100 acquires article management information 303 registered in the article management system at a user's side. Various methods as illustrated in Fig. 6, such as an access via a network 402 or via a media 401 stored in and distributed with an information recording medium such as DVD may be employed to acquire the information. When an access via a network is employed, access to various types of articles is possible by designating an URL as an article identifier.

In step S104, the processing for acquiring an article with the recording apparatus 100 may be executed at an optional timing, and a user can confirm contents of article by having the acquired article data displayed on a display. As described before, the article management information registered in the article management system is recorded with a data format such as XML, HTML or Style Sheet, and the user's recording apparatus 100 executes the processing for displaying the data in response to the various data format to display an image, text data and the like included in the article.

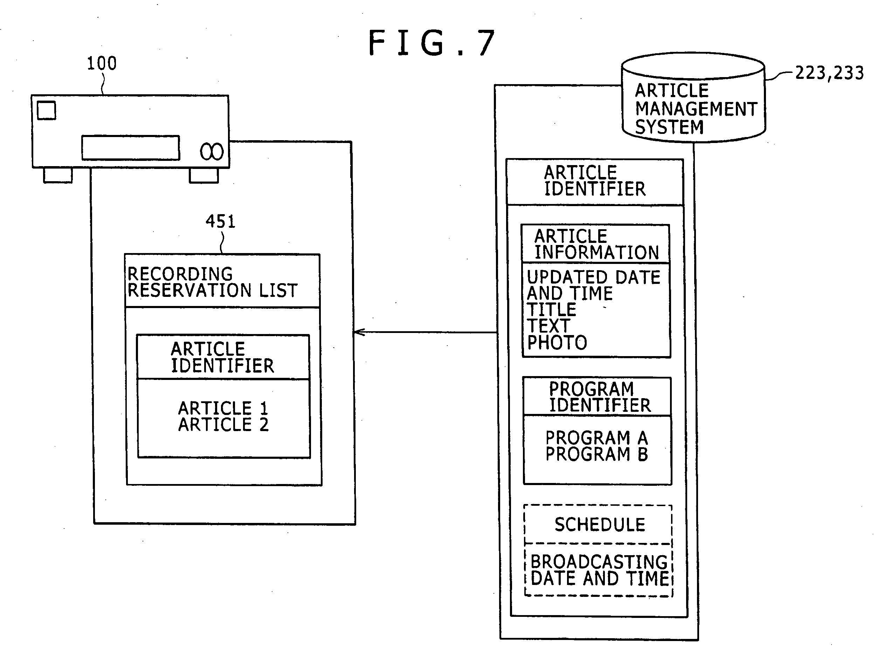

When the user checks the article and decides to record a program relating to the article, the user registers the article identifier in a recording reservation list set in the recording apparatus 100 in step S105 shown in Fig. 5. Configuration of the recording reservation list is shown in Fig. 7.

The recording apparatus 100 generates a recording reservation list 451 as shown in Fig. 7 in a memory section such as a hard disk (HDD) 115 illustrated in Fig. 1, and stores the recording reservation list 451 therein. The recording list 451 stores therein the article identifier assigned to the article in which the user is interested.

The processing for storing the article identifier in the recording reservation list 451 may be carried out by having the article on the display so that the user can visually check it and storing the article identifier according to the user's input. Alternatively, the article identifier may be automatically registered according to the user's preference information previously recorded in the recording apparatus 100. In such automatic registration according to user's preference information, for instance, category information registered as the preference information, category information included in article information with any key word, and words in the texts of the articles are verified to select the articles having higher score of this verification process and then the article identifier of such articles is registered.

Whether the process of storing the article identifier in the recording reservation list 451 is executed in response to an user's input or automatically according to the user's preference information, this process can be executed before the broadcasting date and time of the program relating to the article are fixed.

Then, when the broadcasting date and time of the program for the article are fixed, in the step S106 shown in Fig. 5, the information concerning the broadcasting date and time is stored in the program management information of the program management system 211, and the program management information 304 is sent to the article management system 223, 233. The article management system 223, 233 stores the information concerning the broadcasting date and time in the article management information stored in the article management system 223, 233. This process corresponds to the process previously described with reference to Fig. 4.

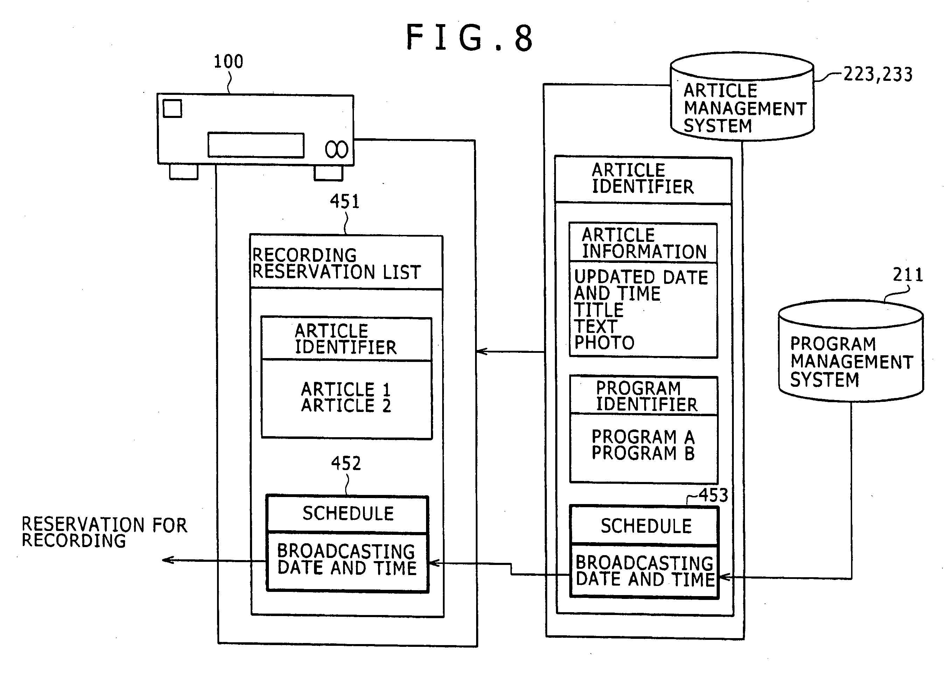

Next, in step S107 in Fig.5, the user's recording apparatus 100 accesses the article management information of the article management system 223, 233, acquires the article management information 305 including the information concerning the broadcasting date and time, and registers the acquired broadcasting date and time information in the recording reservation list previously generated. This process is described below with reference to Fig. 8.

Fig. 8 shows a program management system 211 in which program management information for each program for a program identifier is stored, the article management system 223, 233 managing the article information created by a director, a cast and so on with the correlated article identifier, and the recording apparatus 100 owned by a user. The recording apparatus 100 stores the recording reservation list 451 in a memory section thereof like an HDD.

The recording reservation list 451 stores therein the article identifier of the articled selected based on the user's input or the user's preference information stored in the recording apparatus 100. At a time point when the article identifier is stored, the broadcasting date and time of the program for the article have not been fixed, and the schedule information 452 is not stored in the recording reservation list 451.

When the broadcasting date and time of the program for the article identifier stored in the recording reservation list 451 are fixed, the broadcasting date and time is stored in the program management information of the program management system 211, and is sent to the article management system 223, 233. The article management system 223, 233 stores the schedule information 453 including the broadcasting date and time in the article management information in the article management system 223, 233. This process is equivalent to the process previously described with reference to Fig. 4.

In other words, the article management system 223, 233 sends the data for the article identifier for the article stored in the article management system to the program management system 211, and the program management system 211 stores the data of the article identifier sent from the article management system 223, 233 in the program management information therein. In addition, when the broadcasting date and time information sent, for instance, from a producer of a broadcasting station or other staff in the program management information, the program management system 211 sends the information of the broadcasting date and time to the article management system storing therein the article for the registered article identifier to notify the broadcasting date and time.

In the information concerning the broadcasting date and time sent from the program management system 211 to the article management system 223, 233, either program identifier information or article identifier information is set. The article management system 223, 233 stores the notified broadcasting date and time information in either article management information including a correlated program identifier information or the article management information with the correlating article identifier information set therein based on either one of the information corresponding to the identifier.

Then the user's recording apparatus 100 accesses the article management system 223, 233, acquires the article management information including the schedule information including the information concerning the broadcasting date and time therein, and registers the acquired broadcasting date and time information in the recording reservation list 451 as the schedule information 452 for the program.

In addition, the processing of the recording apparatus 100 for acquiring the schedule information may be carried out as a process for acquiring a new article by accessing the article management system 223, 233, or as a process of the article management system 223, 233 for notifying the schedule.

Alternatively the configuration is allowable in which, when the recording apparatus 100 accesses the article management system 223, 233 for acquiring other article, the article management system 223, 233 sends the information indicating that an updated article including new information concerning the broadcasting date and time set anew is present to the recording apparatus 100 for prompting a user to acquire the article.

Further, the configuration is allowable in which, when the recording apparatus 100 accesses the article management system 223, 233, an operation is automatically executed for checking whether or not there is additional update, on the article management information, of the schedule information including the information of the broadcasting date and time for the article identifier stored in the recording reservation list 451 of the recording apparatus 100. If the article management information of any additional update is found, such information is sent.

After the broadcasting date and time information is stored in the recording reservation list, in the step S108 shown in Fig. 5, the recording apparatus 100 records the program for the article based on the broadcasting date and time information registered in the recording reservation list under control by the CPU and time information received from the internal clock.

### [3. Processing for collecting acquired articles and processing for presenting a program guide to users]

Next the recording apparatus for acquiring various articles concerning a program from a the article management system is described, and the recording apparatus is based on the configuration in which collected articles are compiled and classified for each program based on program identifiers acquired together with the article management information respectively, and programs that the user is much interested, which is determined based on the collected articles, are selectively presented.

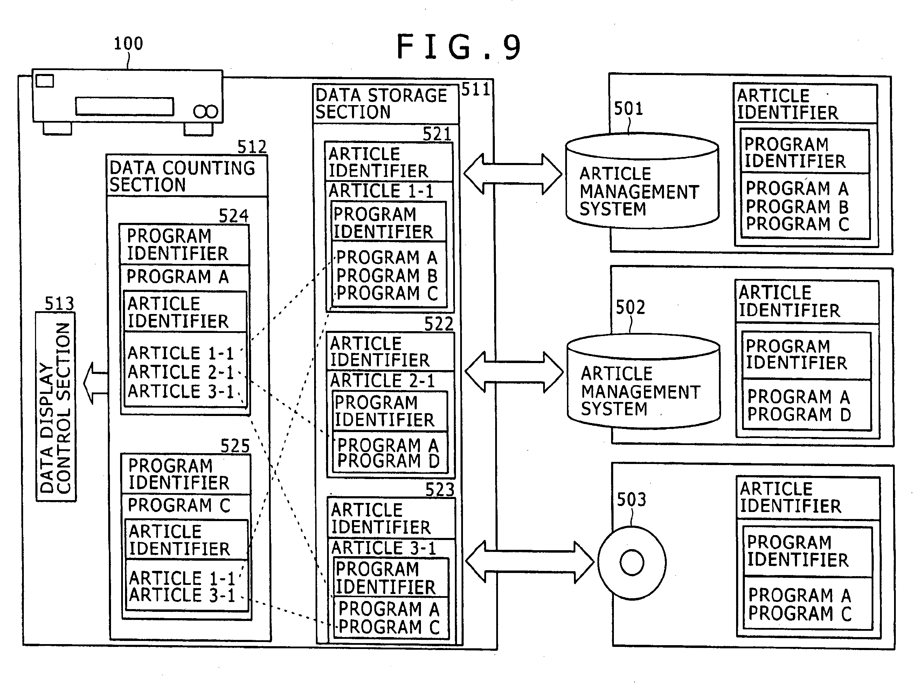

The process for counting articles executed by the recording apparatus is described with reference to Fig. 9. The recording apparatus 100 collects various articles via article management systems 501, 502 or a recording medium 503 such as a DVD generated based on information supplied from the article management system, and stores the articles in a data storage section 511 such as a hard disk in the recording apparatus 100.

The article management information stored in the data storage section 511 has the data structure as described above with reference to Fig. 4. a) article information and b) program identifier are stored as information associated with an article identifier (article ID) such as a URL for access, for instance, to the article management system. The a) article information includes documents describing how production of each program is going, or pictures or texts description for location activities. The b) program identifier is described above with reference to Fig. 3, and is registered in a program management system at a broadcast station.

Fig. 9 shows an example in which three articles 1-1, 2-1, 3-1 are stored in the data storage section 511 of the recording apparatus 100. Each of [article 1-1], [article 2-1], and [article 3-1] indicates article information. Although only three articles are shown in Fig. 9, actually a number of articles are stored in the data storage section, and data collection is made from a number of articles. [Program A], [Program B], and [Program C] are registered each as a program identifier in article management information 521 including [article 1-1], which indicates that the [article 1-1] is article information relating to the [Program A], [Program B], and [Program C]. [Program A] and [Program D] are registered each as a program identifier in article management information 522 including the [article 2-1], which indicates that the [article 2-1] is article information relating to [Program A] and [Program D]. [Program A] and [Program C] are registered each as a program identifier in article management information 523 including the [article 3-1], which indicates that the [article 3-1] is article information relating to [Program A] and [Program C].

A data counting section 512 executes a counting process for the articles stored in the data storage section 511.

The counting process is executed as a process for classifying article identifiers by each program identifier set in each article management information.

As an example of counting data generated as a result of the counting process, two sets of counting data 524, 525 are shown in the data counting section 512 shown in Fig. 9.

The counting data 524 is set as a collection of article identifiers each having a program identifier corresponding to Program A. The counting data 525 is set as a collection of article identifiers each having a program identifier corresponding to Program C.

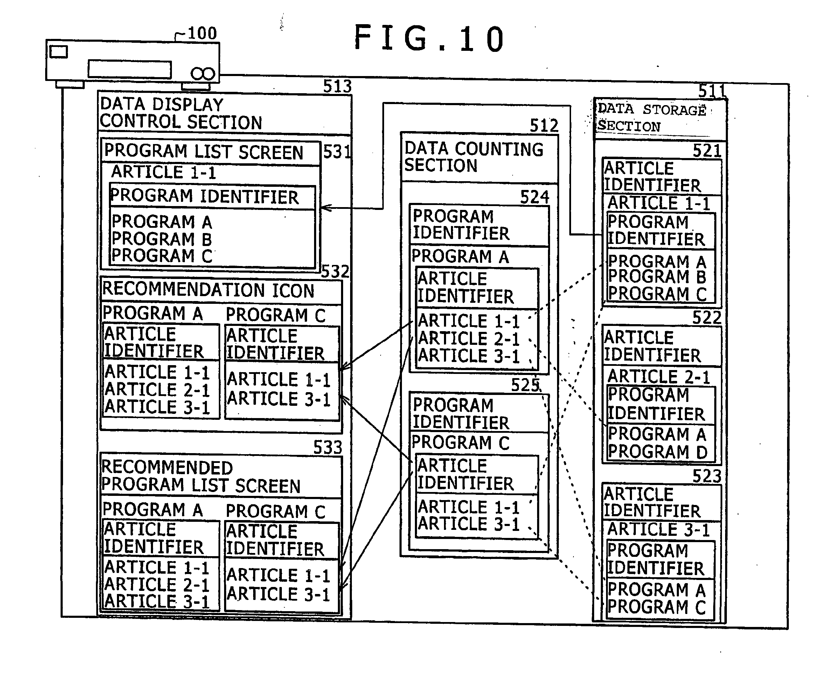

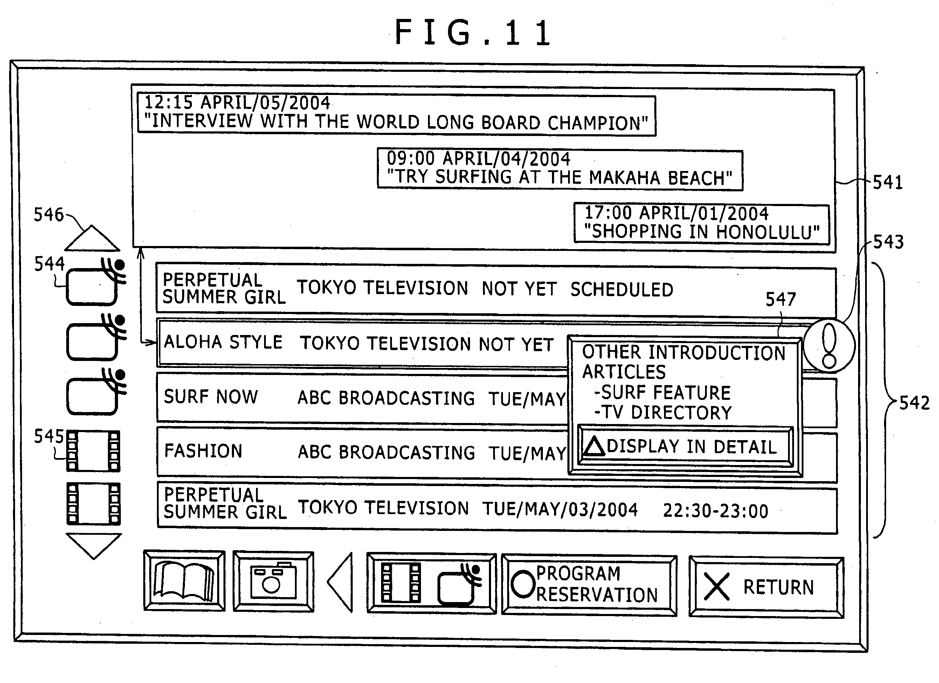

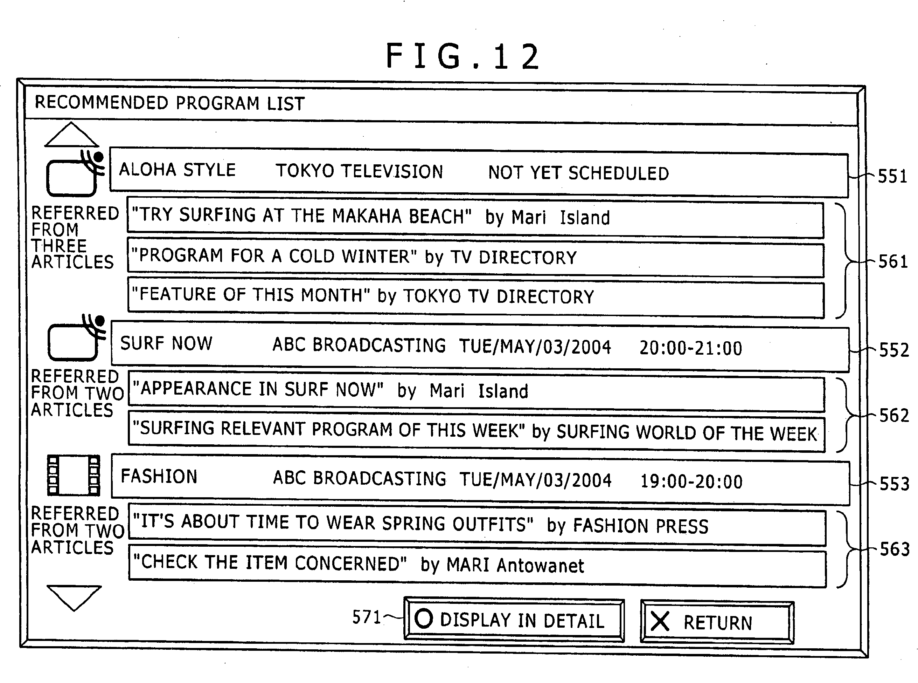

Data display is carried out by a data display control section 513 based on the counting data. The data display processing executed by the data display control section 513 is described below with reference to Fig. 10 to Fig. 12. Fig. 10 is a view illustrating configuration of display data displayed on the data display control section 513 of the recording apparatus 100, and Fig. 11 and Fig. 12 show specific examples of displays respectively.

As shown in Fig. 10, the data display control section 513 shows a list display screen for programs corresponding to the acquired articles using data for a program list screen 531. Further a recommendation icon is shown for programs having many acquired articles with data for a recommendation icon 532. Further the data display control section 513 shows a recommended program list screen showing program information in the descending order of number of acquired articles for respective programs using data for a recommended program list screen 533.

An example of specific display prepared by using the data for a program list screen 531 and the data for a recommendation icon 532 is described below with reference to Fig. 11.

Fig. 11 shows configuration of a screen displayed on a display of the recording apparatus 100. The display data includes an article information display area 541 and a program information display area 542. Guidance information for articles corresponding to a program selected by the user, for instance, with a remote controller is shown in the program information display area 542.

Fig. 11 shows an example in which the second program [ALOHA STYLE] among the programs displayed on the program information display area 542 has been selected, and information concerning the articles corresponding to this program is shown in the article information display area 541.

Of the data shown in a data display section of the recording apparatus 100, the data for a program list screen 531 is set as display data to be displayed on the program information display area 542 shown in Fig. 11. Article information corresponding to the article identifier set in the data for a recommendation icon 532 shown in Fig. 10 is displayed in the article information display area 541 shown in Fig. 11.

The icons shown associated with the program information displayed in the program information display area 542 shown in Fig. 11 are an icon 544 for a program to be broadcasted and an icon 545 for a recorded program, and with the icons described above, a user can determine whether a program is to be broadcasted or has been recorded. An arrow icon 546 is used to scroll the program information in the vertical direction.

A recommendation icon 543 is displayed in a specified program display section in the program information display area 542 shown in Fig. 11. This icon is present, when a number of articles for a specific program collected by the recording apparatus is equal to or more than a prespecified value, to the program.

A number of program identifiers set in each article management information stored by the recording apparatus in the storage section is counted for each program identifier, and when the count number is equal to or more than the prespecified threshold value, the recommendation icon 543 is displayed. This icon suggests that the articles collected by the user's recording apparatus 100 include articles relating to a particular program. Therefore, it is determined that the user's interest in the program is high, and the recommendation icon 543 is displayed. With this recommendation icon 543, the user can easily identify the interested program.

When the user wants to check the information relating to the program shown in the program information display area 542 shown in Fig. 11, the user presses the "Display in Detail" button in a data display section 547.

When the user presses the "Display in Detail" button in a data display section 547, the recommended program list screen shown in Fig. 12 is presented. The recommended program list screen shows a result of counting for program identifiers for each of the articles acquired by the recording apparatus 100 as a list in which the programs having many acquired articles are arrayed in the descending order of the acquired articles.

In the example shown in Fig. 12, the [ALOHA STYLE] shown in program information 551 is a program having most related articles, and three sets of article information 561 is displayed under the [ALOHA STYLE] as program information 551. [Surf Now] shown in program information 552 is the next highest program having related articles, and the two sets of program information 562 are shown under [Surf Now] as program information 552. The [Fashion] shown in program information 553 also has two related articles, and information 563 of the two articles is shown under [Fashion] as program information 553.

When a button 571 is pressed to specify any of the articles, contents of the article is shown.

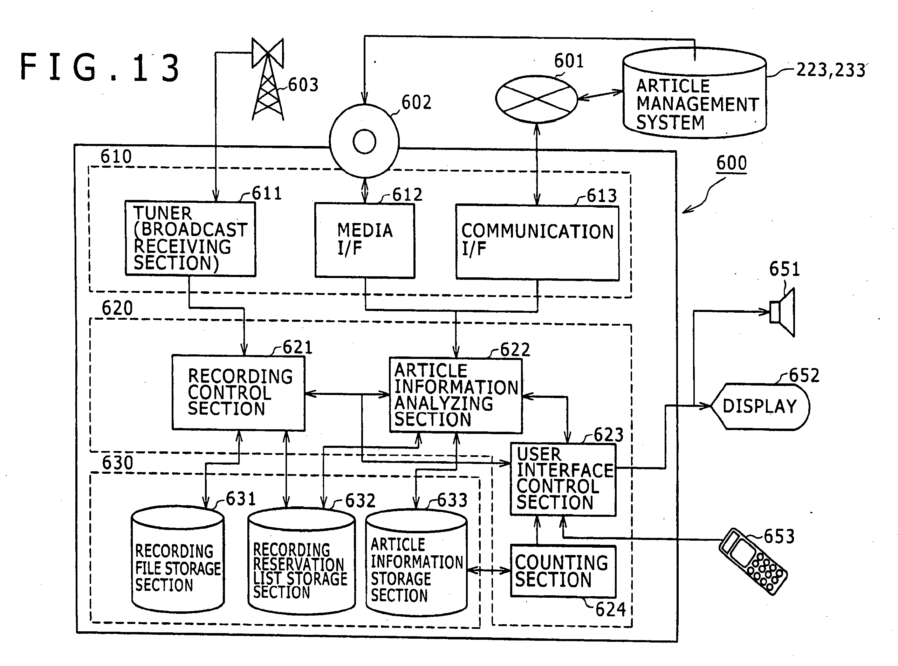

Next processes executed by and functions of the recording apparatus according to the present invention are described with reference to Fig. 13. Hardware configuration of the recording apparatus according to the present invention is as described above with reference to Fig. 1. Fig. 13 is a view illustrating processes executed by the recording apparatus centering on the processes according to the present invention.

A recording apparatus 600 shown in Fig. 13 includes a date receiving section 610, a date processing section 620, and a data storage area 630. The date receiving section 610 has a turner 611 for receiving a broadcast from each broadcasting station 603, a media interface 612 for receiving data from recording media like a DVD, and a communication interface 613 for communication via a network 601 like the Internet.

The data processing section 620 has a recording controlling section 621, an article information analyzing unit 622, and a user interface controlling section 623, and a collecting section 624. The data processing in the data processing section is performed by specific programs under control by the CPU 111 shown in Fig. 1. The user interface controlling section (display control section) 623 sends data to the speaker 651 and the display 652 as a data output section and also receives data from the remote control 653 as a data input section.

The data storage area 630 has a recording file storage section 631, a recording reservation list storage section 632, and an article information storage section 633. The components may be equivalent to, for instance, the hard disk 115 as shown in Fig. 1.

As described above, the article management system 223, 233 is a server having a database for storing therein articles created by persons concerned for a program, like a director, a cast and staff, and can be accessed from the user's recording apparatus 600 for acquire the article. The articles may be acquired based on, for instance, a URL as an article identifier.

In the article information analyzing unit 622, a user analyzes, for instance, a date structure of the acquired article management information, and the user outputs the data via a display 652 and a speaker as image and audio information based on the user's operational information received via the user interface controlling section 623. The acquired article information is stored in the article information storing section 633.

For the articles stored in the article information storage section 633, in the collecting section 624 as described with reference to Fig. 9 to Fig. 12 above, collect data as collect data for article identifiers indicating article information for each program is generated based on the program identifiers set in the article management information, and the program list display, recommendation icons, and recommended program list screen shown in Fig. 12 are displayed on a display 652 via the user interface control section 623.

When the user checks the article information displayed on the display 652 and wants to record, then the user reserves recording of the contents by specifying the article. With the processing, the article information analyzing unit 622 creates a recording reservation list with the article identifier previously described with reference to Fig. 7 and Fig. 8 stored therein, and then stores the list in the recording reservation list storing section 632 in the data storage area.

Further the article information analyzing unit 622 acquires the article management information with the information concerning the broadcasting date and time set by the article management system 223, 233 as the article management information for an article identifier stored in a recording reservation list storage section 632, and then the article information analyzing unit 622 writes the information concerning the broadcasting date and time in the recording reservation list stored in the recording reservation list storage section 632. This is the process described above with reference to Fig. 8 above.

When the information concerning the broadcasting date and time is registered in the recording reservation list, an article identifier for the information concerning the broadcasting date and time received via the data receiving section 610 is verified to an article identifier registered in the recording reservation list registered in the recording reservation list storage section 632, and when the two article identifiers are identical to each other, the acquired broadcasting date and time information is registered in the recording reservation list.

Then, the recording controlling section 621 records according to the recording reservation list with the broadcasting date and time information set therein in the recording reservation list storage section 632, and creates a recording file including recorded data and stored the file in the recording file storage section 631.

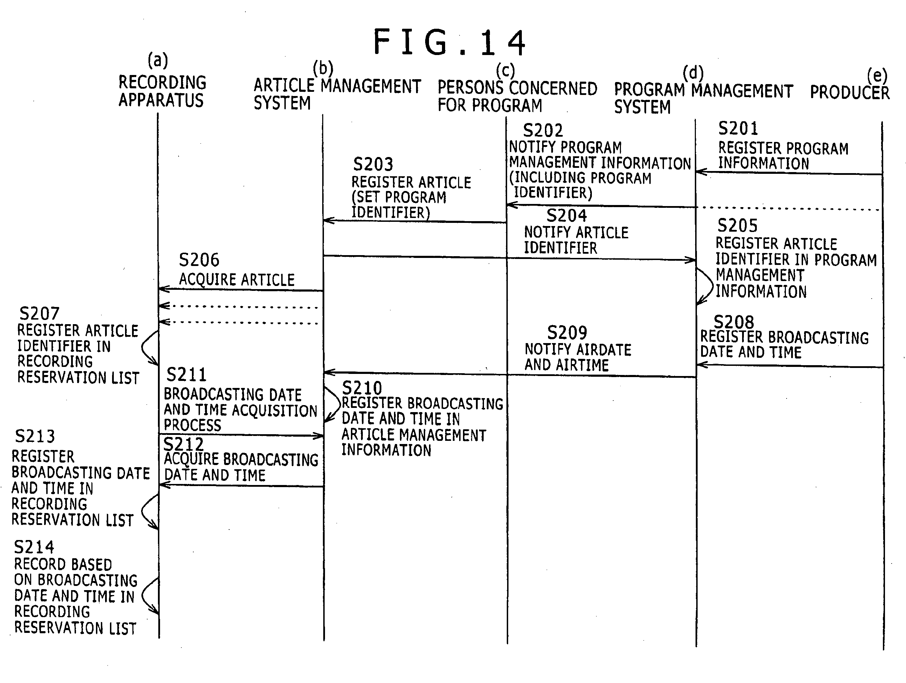

The process sequence from production of a program to completion of an operation for recording the program is described with reference to Fig. 14. Fig. 14 shows processes executed by the following components and persons concerned from the left side:
(a) a recording apparatus owned by a user
(b) an article management system having a database in which persons concerned stores articles
(c) persons concerned for a program including a director, a cast and staff
(d) production management system for storing therein various types of program management information for a program identifier
(e) producer for the program

First, in step S201, a producer registers information for a program to be produced in the program management system. As described above with reference to Fig. 3, this information includes attribute information such as a title of the program and an outline thereof, information of persons involved in production of the program including casts and a director, and schedule information such as filming date and time, broadcasting date and time, and the information is for a program identifier such as a URL thereof. At this point of time, the broadcasting date and time may have not been fixed yet.

Next, in step S202, the program identifier is informed to persons in charge of the program including a director, a cast and staff from the program management system. This information may be sent via a network, or with a medium and the like.

In step S203, articles created by the persons in charge of program, such as a report for shooting at a location and the like are registered in the article management system. During this registration step, the article is registered together with a program identifier, and the article management information including each article and a program identifier for each program is stored in the article management system. The article management information is associated with an article identifier such as a URL thereof. The article manage information has the data structure described above with reference to Fig. 4.

Although Fig. 14 shows only one related person and one article management system, as explained above, there may be many persons in charge of the program including a director, casts and staff. The article management system may be provided in each production office to which each person belongs respectively.

When an article is registered in an article management system in step 203, in the next step S204, an article identifier set in the registered article is sent from the article management system to the program management system. In step S205, the program management system registers the article identifier in the program management information. This is the process previously described with reference to Fig. 4.

In step S206, the user's recording apparatus acquires an article from the article management system. This operation for acquiring an article may be executed at any timing.

In step S207, a user checks the acquired article and registers the article identifier in the recording reservation list to make the program for the article to be recorded. This process is equivalent to the process previously described with reference to Fig. 7. In addition to the configuration in which an article identifier is registered in a recording reservation list in response to a user's explicit operation, another configuration is allowable in which an article for higher user's preference is automatically selected based on the user's preference information stored in the recording apparatus and then the selected article identifier is registered in the recording reservation list.

Next, when the broadcasting date and time are fixed in step S208, the broadcasting date and time information is recorded in the program management information of the program management system by the producer of the broadcasting station or any person in charge of the program.

When the broadcasting date and time information is recorded in the program management information of the program management system, in step S209, the broadcasting date and time information is sent from the program management system to the article management system, and, in step S210, the article management system stores the information broadcasting date and time in the article management information. Further, either a program identifier or an article identifier, or both of these identifiers are set in the broadcasting date and time information sent from the program management system to the article management system, and, in the article management system, corresponding article management information is identified based on the identifiers and the broadcasting date and time information is stored in the article management information. This process corresponds to the process described above with reference to Fig. 8.

Next, in step S211, the recording apparatus accesses the article management system, and, in step S212, the recording apparatus acquires the article with the broadcasting date and time information stored therein from the article management system, and, in step S213, the recording apparatus registers the broadcasting date and time information in the recording reservation list with the corresponding article identifier registered therein. In step 214, the recording is executed according to the image recording reservation list with broadcasting date and time information registered therein.

As described above, with one embodiment of the present invention, it is possible to reserve a program recording by designating various articles for the program that can be acquired even when the broadcasting date and time of the program is not fixed, and a reservation for recording can be made in the early stage without the need of waiting for the issue of an EPG (Electric Program Guide) not sent before the broadcasting date and time are fixed.

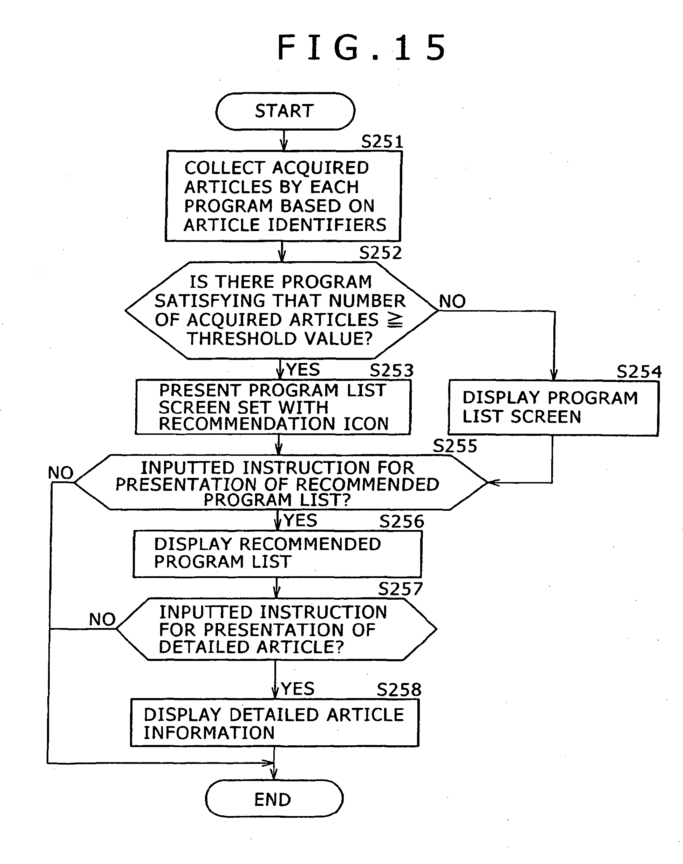

Next, with reference to Fig. 15, a process sequence for presenting a program list and also presenting article information centering on the processes executed by the collecting section 624 and the user interface control section (display control section) 623 shown in Fig. 13 is described.

The process in step S251 is executed by the collecting section 624 in a block diagram shown in Fig. 13, and in this processing, article management information stored in the article information storage section 633 shown in Fig. 13, and collect data with article identifiers for various programs accumulated therein is generated based on the program identifiers included in the article management information. The generated collect data is equivalent to collect data 524, 525 in the data collecting section 512 shown in Fig. 9 and Fig. 10, for example.

In step S252, whether or not a program, for which a recommendation icon should be set, is present. This process is executed by determining based on the collect data whether or not a number of articles for each program is equal to or more than a prespecified threshold value.

The processes in step S253 and on are executed by the user interface control section (display control section) 623 based on the collect data generated by the collecting section 624 as well as on an input from a user. When it is determined in step S252 that there is a program having related articles equal to or more than a prespecified threshold value, the process goes to step S253, and a program list screen with a recommendation icon set therein is presented. This screen is equivalent to the example of screen shown in Fig. 11. The program information for the programs each having related articles equal to or more than the threshold value is presented on a display with the recommendation icon 543 shown in Fig. 11 appended thereto.

When it is determined that there is no program having program-related articles equal to or more than the threshold value, the process goes to step S254, and a program list screen with any recommendation icon not set therein is displayed. This screen is equivalent to a screen obtained by deleting the recommendation icon 543 from the screen described with reference to Fig. 11.

After the program list screen is presented, whether or not an instruction for presentation of the recommended program list has been inputted from a user is determined in step S255. When it is determined that the instruction has been inputted, the process goes to step S256, and the recommended program list is displayed on a display. This process is equivalent to the process for switching the display screen to the recommended program screen shown in Fig. 12 carried out by a user by pressing the "Display in Detail" button in the data display section 547 on the display screen shown in Fig. 11.

Further, when an instruction for presentation of detailed article is inputted in step S257 after the recommended program list is displayed, the detailed article information is displayed on a display in step S258.

The processes described above are executed centering of those executed by the collecting section 624 and the user interface control section 623. Although not shown in the flow chart, when, for instance, and instruction for scrolling is inputted, a process for switching the display screen is executed in accordance with the instruction.

As described above, with the configuration according to the present invention, acquired articles are classified based on the program identifier included in the article management information to determine which articles correspond to which programs respectively, and a program list with programs having many acquired articles set at higher ranks therein is displayed. Alternatively, recommendation icons are appended to programs having many acquired articles for presentation to a user, so that the user can immediately recognize programs interesting the user more as compared to other programs. Therefore, by selecting programs according to the principle as described above and setting the article identifiers in a recording reservation list, a reservation for recording more interesting programs can efficiently be performed.

### [4. Other examples]

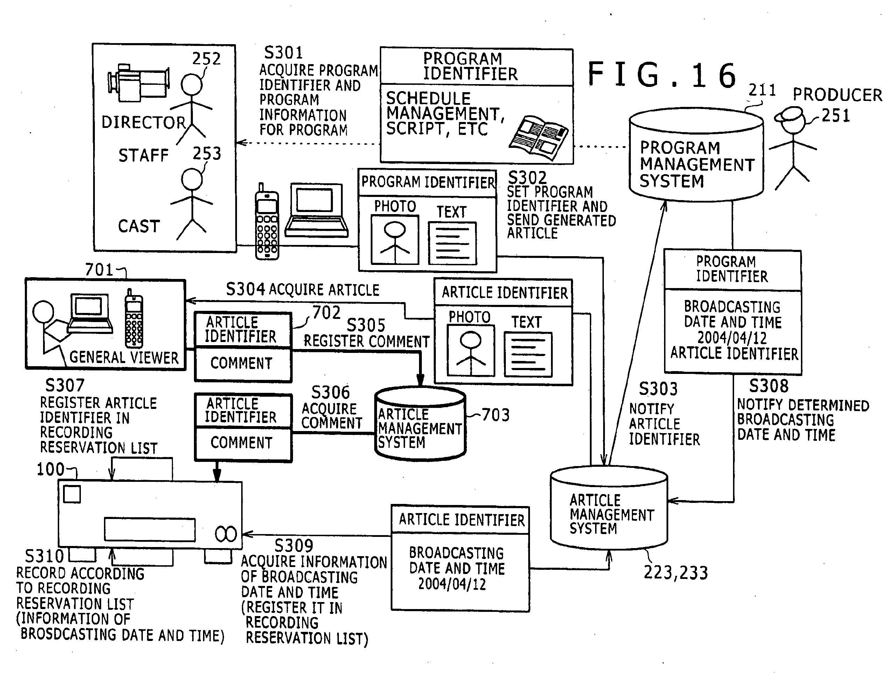

Next, other embodiments of the present invention are described with reference to Fig. 16 to Fig. 18.

At first, an example of configuration in which a reservation for recording can be made based on the comments about an article provided by general viewers and stored in article management systems and the like is described with reference to Fig. 16.

In the example described above, a user's recording apparatus acquires an article created by persons concerned for a program stored in an article management system, and the reservation for recording can be performed based on the acquired article. But one embodiment shown in Fig. 16 is that the reservation for recording can be made based on data such as a comment on the article provided by general viewers who checked the article stored in an article management system.

A process sequence from production of a program up to start of recording is described below with reference to Fig. 16. In Fig. 16, the process proceeds from step S301 to S310 in this order.

In the step S301, program management information including a program identifier is sent to persons concerned for a program such as a director 252, a cast 253 and other staff based on the program management information managed in a program management system 211 managed by a producer 251 of broadcast station etc.

In the step S302, a director 252, a cast 253, and other staff create articles such as topics relating to the program, and combined data of the created article and a program identifier thereof are stored in the article management system 223, 233. In the article management system 223, 233, an article identifier (such as a URL) is registered for each stored article and stored in a database of the article management system 223, 233.

Although Fig. 11 shows only one article management system, as described above, separate servers may be provided for persons concerned for the program, namely for productions to which the casts belong respectively as an article management system 223, 233.

In the step S303, the article identifier is notified from the article management system 223, 233 to the program management system 211. This process is executed each time a new article is registered in the article management system 223, 233 or periodically. In the program management system 211, the article identifier sent from the article management system 223, 233 is registered in the corresponding program management information. This is the process previously described with reference to Fig. 3.

On the other hand, in the step S304, general viewers (user) 701 acquire the information registered in the article management system. To acquire the information, various methods such as, for instance, access via a network or a medium stored in an information recording medium such as a DVD for distribution may be employed. When accessing via a network, it is possible to access various types of articles by designating a URL as an article identifier.

Next, in the step S305, general viewers (user) 701 checks the acquired article, creates a comment and stores the comment data 702 that is a pair of data consisting of the comment and an article identifier in the article management system 703. The article management system 703 may be a server managed by a user or a server managed by a service provider, also may be provided in the same database as that of the article management system 223, 233.

Next, in the step S306, a recording apparatus 100 acquires comment data provided from general viewers from the article management system 703. It is to be noted that the user of the recording apparatus 100 is different from a user who provides the comment. The users providing the comments are general public users.

A user of the recording apparatus 100 can display and check the comments acquired in the step S306. The information registered in the article management system 703 is recorded with the data format such as XML, HTML, and Style Sheet, and the user's recording apparatus 100 can display the data with the data format.

When a user checks a comment and decides to record the program related to the comment, in the step S307 shown in Fig. 16, the article identifier is registered in the recording reservation list registered in the recording apparatus 100. The configuration of the recording reservation list is as described with reference to Fig. 7, and in the recording reservation list, an article identifier of the article that the user has the interest is stored. The article identifier may be stored in the recording reservation list before the broadcasting date and time of the program related to the comment or the article are fixed.

When the broadcasting date and time of the program associated with the article identifier stored in the recording reservation list registered in the recording apparatus 100 are fixed, in the step S308 shown in Fig. 16, the broadcasting date and time information is stored in the program management information of the program management system 211, and the broadcasting date and time information is sent to the article management system 223, 233. The article management system 223, 233 stores the broadcasting date and time information in the article management information stored in the article management system 223, 233. This process is equivalent to the process previously described with reference to Fig. 4.

Next, in the step S309 shown in Fig. 16, the user's recording apparatus 100 accesses the article management information stored in the article management system 223, 233 to acquire the broadcasting date and time information, and registers the acquired broadcasting date and time information in the recording reservation list previously prepared. This process is the same process as that described with reference to Fig. 8.

Then, the user's recording apparatus 100 registers the acquired broadcasting date and time in the recording reservation list with the article identifier registered therein.

After the broadcasting date and time information is stored in the recording reservation list, in the step S310 shown in Fig. 16, the recording apparatus 100 records the program associated with the article based on the broadcasting date and time information registered in the recording reservation list under the control by the CPU and time information inputted from the internal clock.

In this embodiment, a program is recorded by specifying the program not based on articles provided by persons concerned for but based on the information provided by users such as comments from general viewers, and with this configuration, it is also possible to grasp contents of a program and record the program based on the data provided from more data providers than the persons concerned.

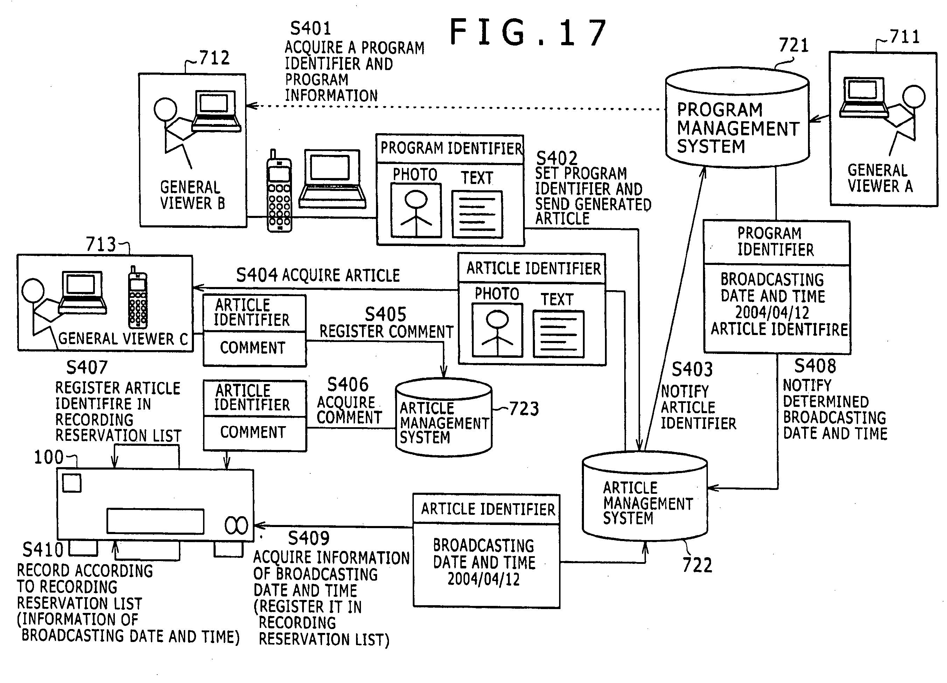

Next, an example in which the entire system is built based on the data provided by general viewers is described with reference to Fig. 17.

In the example described first with reference to Fig. 5, a program management system stores and manages the information provided by a producer of a broadcasting station, and an article management system stores and manages the information provided by a person concerned for the program. But in the system shown in Fig. 17, both the program management system and the article management system are managed based on data provided by general viewers.

A process sequence based on the system configuration shown in Fig. 17 is described below. In Fig. 17, the process sequence progresses from step S401 through step S410.

In step S401, a general viewer B712 accesses a program management system 721 managed by other general viewer A711 as a general user to acquire a program identifier (such as URL) of the program managed by the program management system 721.

In the step S402, the general viewer B712 creates an article as an original content such as a topic relating to the program, and stores the combined data including the created article and the program identifier thereof in the article management system 722. The article management system 722 registers the article identifier (such as URL) for each stored article and stores them in a database of the article management system 722. The article management system 722 may be a server managed by a user or a server managed by a service provider and so on.

Fig. 12 shows only one general viewer B712 and one article management system 722, but the general viewer B712 indicates the general public, and also there may be a number of article management systems.

In the step S403, notification of the article identifier is sent from the article management system 722 to the program management system 721. As is the case described in the example above, when a new article is registered in the article management system 722, the article identifier is sent from the article management system 722, and the article is registered as the program management information of the program associated with the article. This is the same process as that described above with reference to Fig. 3.

In the step S404, a general viewer C713 acquires information registered in the article management system 722. In the step S405, the general viewer C713 checks the acquired article, creates a comment and stores combined data including the comment and the article identifier in an article management system 723. The article management system 723 may be a server managed by a user, or a server managed by a service provider, and also may be in the same database as that of the article management system 722. The article management system 723 stores comments from general viewers with a correlated article identifier.

Next, in the step S406, a recording apparatus 100 acquires the comment of general viewer C713 from article management system 723. It is to be noted that a user of the recording apparatus 100 is different from the general viewers A to C.

The user of the recording apparatus 100 may have the comments acquired in the step S406 displayed on a display to check the contents of the comments. The information registered in the article management system 723 are recorded with the data format such as XML, HTML and Style Sheet, and the recording apparatus 100 displays the data with the corresponding data format.

When the user of the recording apparatus100 checks the comments and the user determines that a program relating to the comments is to be recorded, the user registers an article identifier in the recording reservation list set in the recording apparatus 100 in step S407 shown in Fig. 17. Configuration of the recording reservation list is the same as that described above with reference to Fig. 7, and in the recording reservation list, an article identifier of the article that the user has an interest is stored. The article identifier may be stored in the recording reservation list before the broadcasting date and time of the program related to the comments or articles are fixed.

Then, when the broadcasting date and time of the program associated with the article identifier stored in a the recording reservation list registered in a recording apparatus 100 are fixed, a general viewer A511 stores the information concerning the broadcasting date and time in the program management information of the program management system 721, and, in the step S408 shown in Fig. 17, the broadcasting date and time information is sent to an article management system 722. The article management system 722 stores the broadcasting date and time information in the article management information stored in the article management system 722. This process is equivalent to that described above with reference to Fig. 4.

Next, in the step S409 shown in Fig. 17, the user's recording apparatus 100 accesses the article management information of the article management system 722 to acquire the broadcasting date and time information, and registers the acquired broadcasting date and time information in the recording reservation list previously created. This process is equivalent to that described above with reference to Fig. 8.

Then, the user's recording apparatus 100 registers the acquired broadcasting date and time information in the recording reservation list with the article identifier acquired therein.

After the broadcasting date and time is stored in the recording reservation list, in the step S410 shown in Fig. 17, the recording apparatus 100 records the program associated with the article based on the broadcasting date and time information registered in the recording reservation list under control by the CPU and the time information received from the internal clock therein.

In this example, general viewers manage the program management system itself, and in this case system management independent of the management of a program producer like broadcasting station becomes possible.

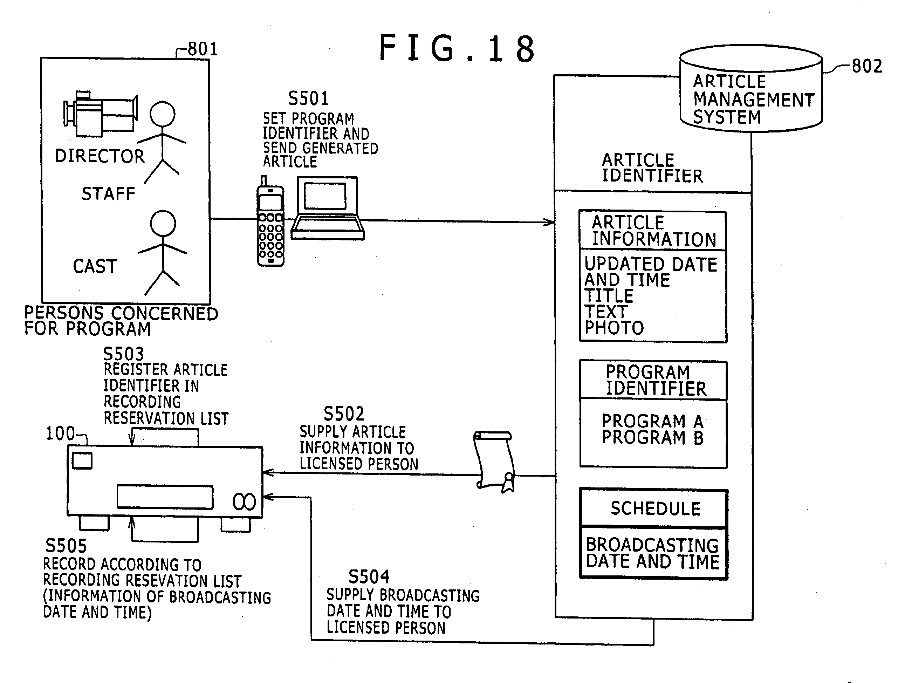

Next, a configuration in which an article managed by an article management system is allowed to check and use based on the license is described with reference to Fig. 18.

In the step S501, articles provided by persons concerned to a program 801 are stored in an article management system 802. It is to be noted that the data stored in the article management system 802 is the same type as that of the data described above in relation to the examples.

In the step S502, the article stored in the article management system 802 is read, but in this example, the article is provided under the licensing system. For instance, the article can be provided only when a recording apparatus accesses an article management system 802 via a network and then the user registration is made or service charge is paid. The article may be supplied the licensing system including the conditions, for instance, that a user is a member of a particular organization.

Further, an article may be acquired not only via a network but also via a medium like a DVD. In such a case, it is possible to grant a license for a certain period based on some conditions including the purchase of the DVD, and if the DVD is provided as the attachment of a magazine, a license for a certain period based on a condition including the purchase of the magazine can be set.

A user who could acquire an article based on such license may check and read the article. When a reservation for recording is to be made, in the step S503 shown in Fig. 18, an article identifier is registered in a recording reservation list registered in the recording apparatus 100. An article identifier of an article that the user has the interest is stored in the recording reservation list.

Then, when the broadcasting date and time of the program associated with the article identifier stored in the recording reservation list registered in the recording apparatus 100 are fixed, in the step S504, the recording apparatus 100 acquires the broadcasting date and time information based on a license from the article management system 802, and registers the acquired broadcasting date and time information in the recording reservation list previously created. This process is the same process as that described above with reference to Fig. 8.

Then, the user's recording apparatus 100 registers the acquired broadcasting date and time in the recording reservation list with the article identifier registered therein. After the broadcasting date and time are stored in the recording reservation list, in the step S505 in Fig. 18, the recording apparatus 100 records a program associated with the article based on the broadcasting date and time information registered in the recording reservation list.

This example is based on the configuration in which only licensed persons can check and read an article managed by an article management system, and with this configuration, user management becomes possible through registration of users when the license is given to users as general viewers, which provides such as promotion of users' eagerness for purchasing DVDs and magazines.

The present invention was described above in details with reference to specific examples thereof. However, it should be understood by those skilled in the art that various modifications, combinations, subcombinations and alterations may occur depending on design requirements and other factors insofar as they are within the scope of the appended claims or the equivalents thereof. The present invention is disclosed by providing some examples, and should not be understood that present invention is limited to the examples described above. To determine a gist of the present invention, claims attached hereto below should be referred to.

The sequence of processes described in this specification may be performed by hardware or software, or with a combination of hardware and software. To carry out the processes by software, a program with the process sequence recorded therein may be installed in a memory of a computer built in dedicated hardware or in a general-purpose computer capable of executing various types of processes.

For instance, a program may previously be recorded in a hard disk or a ROM (Read Only Memory) as a recording medium. Alternatively, the program may be stored (recorded) temporarily or permanently in a removable recording medium such as a flexible disk, a CD-ROM (Compact Disc Read Only Memory), a magnetic disk, and a semiconductor memory. Such removable recording medium may be provided as so-called package software.

The program may be installed from the removable recording medium as described above to a computer. In addition, the program is transferred without wires from a download site to a computer or is transferred over a wire line through a network such as a LAN (Local Area Network) or the Internet to a computer, and in the case the computer receives the program transferred as described above and install the program in a recording medium such as a hard disk incorporated therein.

Various types of processes described in this specification are not only executed in a time series following the descriptions in the specification, but may be executed concurrently or discretely according to the processing capability or a device executing the processes or according to the necessity. A system as used herein indicates configuration based on a logical collection of a plurality of devices, and the component devices are not always required to be provided in the same frame.

## Claims

1. An information processing video recording apparatus comprising:
data input means (104) for inputting article management information including article information relating to a broadcast program and having an article identifier and a program identifier for the broadcast program relating to the article;
a storage section (114) for storing said article management information;
data collecting means (111) for acquiring article management information stored in said storage section (114) and generating collected data with program-related articles classified by program unit based on program identifiers; and
display control means (108) for controlling to generate first display data (542) enabling recognition of programs by means of displaying a recommendation icon (543) having associated therewith plural related articles based on the collected data generated by said data collecting means and for displaying the display data on a display section (121, 551, 561);
wherein said data collecting means (111) is configured to determine based on said collected data whether or not the number of articles for each program is not less than a prespecified threshold value; and
**characterised in**
**that** said display control means (108) is configured to generate second display data (541, 547) with a display format enabling recognition of program information and corresponding article information for program information for which the number of articles is equal to or higher than said threshold value, and
**that** article information (541) when displayed includes an updating date and a title and/or a description and/or a photograph.

2. The information processing video recording apparatus according to claim 1,
wherein said display control means (108) is configured to control display of an icon enabling recognition of program information with the number of articles equal to or higher than said threshold value.

3. The information processing video recording apparatus according to anyone of claims 1 or 2,
wherein said display control means (108) is configured to generate display data having a list format with program information arrayed, based on the collected data, in the descending order of the number of articles corresponding to programs.

4. The information processing video recording apparatus according to claim 3,
wherein said display control means (108) is also configured to generate display data presenting article information corresponding to each program.

5. An information processing video recording method comprising the steps of:
acquiring article management information (S206) including article information relating to a broadcast program and having an article identifier and a program identifier for the broadcast program relating to the article and generating collected data including program-related articles classified by program unit based on program identifiers for data collection; and
controlling to generate first display data (542) (S256) enabling recognition of programs by means of displaying recommendation icon (543) having associated therewith plural related articles based on the collected data generated in said data collecting step and to display the display data on a display section (121, 551, 561);
wherein said data collecting step includes a step of determining based on said collected data whether or not the number of articles for each program is equal to or more than a prespecified threshold value (S252); and characterised in
thatsaid display control step includes a step of generating second display data (541, 547) (S256) having a display format enabling recognition of program information and corresponding article information for program information for which the number of articles equal to or higher than said threshold value, and
that article information (541) when displayed includes an updating date and a title and/or a description and/or a photograph.

6. The information processing video recording method according to claim 5,
wherein said display control step includes the step of controlling display of an icon enabling recognition of program information with the number of articles equal to or higher than said threshold value.

7. The information processing video recording method according to anyone of claims 5 to 6,
wherein said display control step includes the step of generating display data having a list format with program information arrayed, based on the collected data, in the descending order of the number of articles corresponding to programs.

8. The information processing video recording method according to claim 7,
wherein said display control step includes the generating display data also presenting article information corresponding to each program.

9. A computer program for generating display information for video recording, said program comprising the steps of the method according to claim 5.

10. A recording medium having recorded therein a computer program for generating display information for video recording, said computer program comprising the steps of the method according to claim 5.

## Patentansprüche

1. Informationsverarbeitende Videoaufzeichnungsvorrichtung, die Folgendes aufweist:
ein Dateneingabemittel (104) zum Eingeben von Informationen zur Verwaltung von Artikeln, die Artikelinformationen umfassen, die ein Sendeprogramm betreffen und eine Artikelkennung und eine Programmkennung für das Sendeprogramm aufweisen, das den Artikel betrifft;
einen Speicherabschnitt (114) zum Speichern der Informationen zur Verwaltung von Artikeln;
ein Datensammelmittel (111) zum Erfassen von Informationen zur Verwaltung von Artikeln, die im Speicherabschnitt (114) gespeichert sind, und Erzeugen gesammelter Daten mit programmbezogenen Artikeln, die nach Programmeinheit klassifiziert sind, beruhend auf Programmkennungen; und
ein Anzeigesteuermittel (108) zum Steuern der Erzeugung von ersten Anzeigedaten (542), die die Erkennung von Programmen mittels Anzeigen eines Empfehlungspiktogramms (543) ermöglichen, mit dem mehrere damit verbundene Artikel verknüpft sind, beruhend auf den gesammelten Daten, die durch das Datensammelmittel erzeugt werden, und zum Anzeigen der Anzeigedaten auf einem Anzeigeabschnitt (121, 551, 561);
wobei das Datensammelmittel (111) konfiguriert ist, beruhend auf den gesammelten Daten festzustellen, ob die Anzahl von Artikeln für jedes Programm nicht kleiner als ein vorgegebener Schwellenwert ist oder nicht; und
**dadurch gekennzeichnet, dass**
das Anzeigesteuermittel (108) konfiguriert ist, zweite Anzeigedaten (541, 547) mit einem Anzeigeformat zu erzeugen, das die Erkennung von Programminformationen und entsprechenden Artikelinformationen für Programminformationen ermöglicht, für die die Anzahl von Artikeln gleich oder höher als der Schwellenwert ist, und
dass Artikelinformationen (541), wenn sie angezeigt werden, ein Aktualisierungsdatum und einen Titel und/oder eine Beschreibung und/oder eine Photographie enthalten.

2. Informationsverarbeitende Videoaufzeichnungsvorrichtung nach Anspruch 1,
wobei das Anzeigesteuermittel (108) konfiguriert ist, die Anzeige eines Piktogramms zu steuern, das die Erkennung von Programminformationen ermöglicht, bei denen die Anzahl von Artikeln gleich oder höher als der Schwellenwert ist.

3. Informationsverarbeitende Videoaufzeichnungsvorrichtung nach einem der Ansprüche 1 oder 2,
wobei das Anzeigesteuermittel (108) konfiguriert ist, Anzeigedaten, die ein Listenformat mit angeordneten Programminformationen aufweisen, beruhend auf den gesammelten Daten, in der absteigenden Reihenfolge der Anzahl von Artikeln zu erzeugen, die Programmen entsprechen.

4. Informationsverarbeitende Videoaufzeichnungsvorrichtung nach Anspruch 3,
wobei das Anzeigesteuermittel (108) außerdem konfiguriert ist, Anzeigedaten zu erzeugen, die Artikelinformationen präsentieren, die jedem Programm entsprechen.

5. Informationsverarbeitendes Videoaufzeichnungsverfahren, das die folgenden Schritte aufweist:
Erfassen von Informationen zur Verwaltung von Artikeln (S206), die Artikelinformationen umfassen, die ein Sendeprogramm betreffen und eine Artikelkennung und eine Programmkennung für das Sendeprogramm aufweisen, das den Artikel betrifft, und Erzeugen gesammelter Daten, die programmbezogene Artikel umfassen, die nach Programmeinheit klassifiziert sind, beruhend auf Programmkennungen zur Datensammlung; und
Steuern, um erste Anzeigedaten (542) zu erzeugen (S256), die eine Erkennung von Programmen mittels Anzeigen eines Empfehlungspiktogramms (543) ermöglichen, mit dem mehrere damit verbundene Artikel verknüpft sind, beruhend auf den gesammelten Daten, die im Datensammlungsschritt erzeugt werden, und um die Anzeigedaten auf einem Anzeigeabschnitt (121, 551, 561) anzuzeigen;
wobei der Datensammlungsschritt einen Schritt zum Feststellen beruhend auf den gesammelten Daten aufweist, ob die Anzahl von Artikeln für jedes Programm gleich oder größer als ein vorgegebener Schwellenwert ist oder nicht (S252); und
**dadurch gekennzeichnet, dass**
der Anzeigesteuerschritt einen Schritt zum Erzeugen von zweiten Anzeigedaten (541, 547) (S256) umfasst, die ein Anzeigeformat aufweisen, das die Erkennung von Programminformationen und entsprechenden Artikelinformationen für Programminformationen ermöglicht, für die die Anzahl von Artikeln gleich oder höher als der Schwellenwert ist, und
dass Artikelinformationen (541), wenn sie angezeigt werden, ein Aktualisierungsdatum und einen Titel und/oder eine Beschreibung und/oder eine Photographie enthalten.

6. Informationsverarbeitendes Videoaufzeichnungsverfahren nach Anspruch 5,
wobei der Anzeigesteuerschritt den Schritt zum Steuern einer Anzeige eines Piktogramms umfasst, das die Erkennung von Programminformationen ermöglicht, bei denen die Anzahl von Artikeln gleich oder höher als der Schwellenwert ist.

7. Informationsverarbeitendes Videoaufzeichnungsverfahren nach einem der Ansprüche 5 bis 6,
wobei der Anzeigesteuerschritt den Schritt zum Erzeugen von Anzeigedaten, die ein Listenformat mit angeordneten Programminformationen aufweisen, beruhend auf den gesammelten Daten in der absteigenden Reihenfolge der Anzahl von Artikeln umfasst, die Programmen entsprechen.

8. Informationsverarbeitendes Videoaufzeichnungsverfahren nach Anspruch 7,
wobei der Anzeigesteuerschritt das Erzeugen von Anzeigedaten umfasst, die außerdem Artikelinformationen präsentieren, die jedem Programm entsprechen.

9. Computerprogramm zum Erzeugen von Anzeigeinformationen zur Videoaufzeichnung, wobei das Programm die Schritte des Verfahrens nach Anspruch 5 aufweist.

10. Aufzeichnungsmedium, auf dem ein Computerprogramm zum Erzeugen von Anzeigeinformationen zur Videoaufzeichnung aufgezeichnet ist, wobei das Computerprogramm die Schritte des Verfahrens nach Anspruch 5 aufweist.

## Revendications

1. Appareil d'enregistrement vidéo de traitement d'informations comprenant :
un moyen d'entrée de données (104) pour entrer des informations de gestion d'articles comportant des informations d'articles concernant un programme de diffusion et possédant un identifiant d'article et
un identifiant de programme du programme de diffusion concernant l'article ;
une section de mémorisation (114) pour mémoriser lesdites informations de gestion d'articles ;
un moyen de collecte de données (111) pour acquérir des informations de gestion d'articles mémorisées dans ladite section de mémorisation (114) et générer des données collectées avec des articles relatifs au programme classés par unité de programme en fonction des identifiants de programme ; et
un moyen de commande d'affichage (108) pour commander la génération de premières données d'affichage (542) permettant la reconnaissance de programmes par l'affichage d'une icône de recommandation (543) à laquelle sont associés plusieurs articles connexes en fonction des données collectées générées par ledit moyen de collecte de données et pour afficher les données d'affichage sur une section d'affichage (121, 551, 561) ;
dans lequel ledit moyen de collecte de données (111) est configuré pour déterminer en fonction desdites données collectées que le nombre d'articles pour chaque programme est ou n'est pas non inférieur à une valeur limite préspécifiée ; et
**caractérisé en ce que**
ledit moyen de commande d'affichage (108) est configuré pour générer des secondes données d'affichage (541, 547) dans un format d'affichage qui permet la reconnaissance d'informations de programmes et d'informations d'articles correspondantes pour des informations de programme pour lesquelles le nombre d'articles est égal ou supérieur à ladite valeur limite, et
les informations d'articles (541) quand elles sont affichées comportent une date d'actualisation et un titre et/ou une description et/ou une photographie.

2. Appareil d'enregistrement vidéo de traitement d'informations selon la revendication 1,
dans lequel ledit moyen de commande d'affichage (108) est configuré pour commander l'affichage d'une icône permettant la reconnaissance d'informations de programmes avec le nombre d'articles égal ou supérieur à ladite valeur de seuil.

3. Appareil d'enregistrement vidéo de traitement d'informations selon la revendication 1 ou 2,
dans lequel ledit moyen de commande d'affichage (108) est configuré pour générer des données dans un format de liste selon lequel les informations de programmes sont ordonnées, en fonction des données collectées, dans l'ordre décroissant du nombre d'articles correspondant aux programmes.

4. Appareil d'enregistrement vidéo de traitement d'informations selon la revendication 3,
dans lequel ledit moyen de commande d'affichage (108) est également configuré pour générer des données d'affichage présentant des informations d'articles correspondant à chaque programme.

5. Procédé d'enregistrement vidéo de traitement d'informations comprenant les étapes consistant à
acquérir des informations de gestion d'articles (S206) comportant des informations d'articles concernant un programme de diffusion et possédant un identifiant d'article et un identifiant de programme du programme de diffusion concernant l'article et générer des données collectées comportant des articles relatifs au programme classés par unité de programme en fonction des identifiants de programme en vue d'une collecte de données ; et
commander la génération de premières données d'affichage (542) (S256) permettant la reconnaissance de programmes par l'affichage d'une icône de recommandation (543) à laquelle sont associés plusieurs articles connexes en fonction des données collectées générées à ladite étape de collecte de données et afficher les données d'affichage sur une section d'affichage (121, 551, 561) ;
dans lequel ladite étape de collecte de données comporte une étape consistant à déterminer en fonction desdites données collectées que le nombre d'articles pour chaque programme est ou non égal ou supérieur à une valeur limite préspécifiée (S252) ; et
**caractérisé en ce que**
ladite étape de commande d'affichage comporte une étape consistant à générer des secondes données d'affichage (541, 547) (S256) ayant un format d'affichage qui permet la reconnaissance d'informations de programmes et d'informations d'articles correspondantes pour des informations de programmes pour lesquelles le nombre d'articles est égal ou supérieur à ladite valeur limite, et les informations d'articles (541) quand elles sont affichées comportent une date d'actualisation et un titre et/ou une description et/ou une photographie.

6. Procédé d'enregistrement vidéo de traitement d'informations selon la revendication 5,
dans lequel ladite étape de commande d'affichage comporte l'étape consistant à commander l'affichage d'une icône permettant la reconnaissance d'informations de programmes quand le nombre d'articles égal ou supérieur à ladite valeur de seuil.

7. Procédé d'enregistrement vidéo de traitement d'informations selon l'une quelconque des revendications 5 à 6,
dans lequel ladite étape de commande d'affichage comporte l'étape consistant à générer des données d'affichage dans un format de liste selon lequel les informations de programmes sont ordonnées, en fonction des données collectées, dans l'ordre décroissant du nombre d'articles correspondant aux programmes.

8. Procédé d'enregistrement vidéo de traitement d'informations selon la revendication 7,
dans lequel ladite étape de commande d'affichage comporte la génération de données d'affichage présentant également des informations d'articles correspondant à chaque programme.

9. Programme informatique pour générer des informations d'affichage d'un enregistrement vidéo, ledit programme comprenant les étapes du procédé selon la revendication 5.

10. Support de mémorisation sur lequel est enregistré un programme informatique pour générer des informations d'affichage d'un enregistrement vidéo, ledit programme informatique comprenant les étapes du procédé selon la revendication 5.
